(19)

Europäisches Patentamt
European Patent Office
Office européen des brevets

(11) **EP 2 951 529 B1**

(12) **EUROPEAN PATENT SPECIFICATION**

(45) Date of publication and mention
of the grant of the patent:
**10.03.2021 Bulletin 2021/10**

(21) Application number: **14745398.9**

(22) Date of filing: **30.01.2014**

(51) Int Cl.:
***G01C 21/16*** *(2006.01)*     ***G01C 21/20*** *(2006.01)*

(86) International application number:
**PCT/JP2014/052706**

(87) International publication number:
**WO 2014/119801 (07.08.2014 Gazette 2014/32)**

(54) **INERTIAL DEVICE, METHOD, AND PROGRAM**

TRÄGHEITSVORRICHTUNG, -VERFAHREN UND -PROGRAMM

DISPOSITIF INERTIEL, PROCÉDÉ ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2013 JP 2013019210
06.11.2013 JP 2013230548**

(43) Date of publication of application:
**09.12.2015 Bulletin 2015/50**

(73) Proprietor: **Ricoh Company, Ltd.
Tokyo 143-8555 (JP)**

(72) Inventor: **MATSUSHITA, Yusuke
Tokyo 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
WO-A1-2012/020533    JP-A- H1 024 026
US-A1- 2004 186 695    US-A1- 2004 186 695
US-A1- 2011 177 848    US-A1- 2011 177 848

- **KOUROGI MASAKATSU ET AL.: 'Indoor
  positioning system using a self-contained sensor
  module for pedestrian navigation and its
  evaluation' PROCEEDINGS OF SYMPOSIUM ON
  MOBILE INTERACTIONS 03 July 2008, pages 151
  - 156, XP008177447**

**Description**

Technical Field

An aspect of this disclosure is related to an inertial device, a method, and a program.

Background Art

At a location where a global positioning system (GPS) may not be used for measuring a position such as a building or the underground, the pedestrian dead reckoning (PDR) technique is used in order to estimate a position of a pedestrian on an inertial device including an acceleration sensor and a magnetic field sensor.

A conventional method employing an inertial navigation technique estimates a length of stride and a travelling direction for each step using an estimate model for walking motion and calculates the present and past walking flows (Patent Documents 1 and 2).

A conventional inertial device which performs the inertial navigation technique needs to be attached to the body of a walking user or requires calibration after the user takes the inertial device so that the inertial device estimates the length of stride in an accurate way (Patent Documents 3 through 6) .

However, the conventional techniques described in Patent Documents 1 and 2 correct a travel distance and direction for each step of the walking user to estimate a location. Thus, a resolution capability to estimate the location based on user's motion such as walking is limited to a unit of "a single step", and it is difficult to estimate with a higher resolution capability.

In the conventional techniques described in Patent Documents 3 through 6, the user has to attach the device to his waist and keep his posture; or calibrate the device after taking the device instead of keeping his posture. Thus, the conventional inertial device is inconvenient for the user.

US 2004/186695 discloses a method for generating a synthetic velocity by combining different outputs, wherein the outputs include a three-axial accelerometer and the combination involves the use of weighting values.

As described above, the inertial device employing the conventional inertial navigation technique has a low resolution capability (i.e. low accuracy) to estimate the user location in the walking motion, and it is inconvenient for the user.

An embodiment of this invention aims to provide an inertial device, a method and a program, which improve the estimate accuracy of the user location and reduce inconvenience to the user.

Summary of Invention

The invention is defined by the independent claims. The dependent claims relate to preferred embodiments of the invention.

Advantages

Advantageously, the present disclosure provides an inertial device, a method, and a program which substantially eliminate one or more problems caused by the limitations and disadvantages of the related art.

In an advantageous aspect of this disclosure, there is provided an inertial device according to claim 1.

According to another advantageous aspect of this disclosure, there is provided a method according to claim 8.

According to another advantageous aspect of this disclosure, there is provided a program according to claim 9.

Brief Description of Drawings

FIG. 1 is a drawing illustrating an overview of an inertial device according to an embodiment of this invention.
FIG. 2 is a drawing illustrating an overview of a configuration for an inertial device according to an embodiment of this invention.
FIG. 3 is a block diagram of a functional configuration for an inertial device according to an embodiment of this invention.

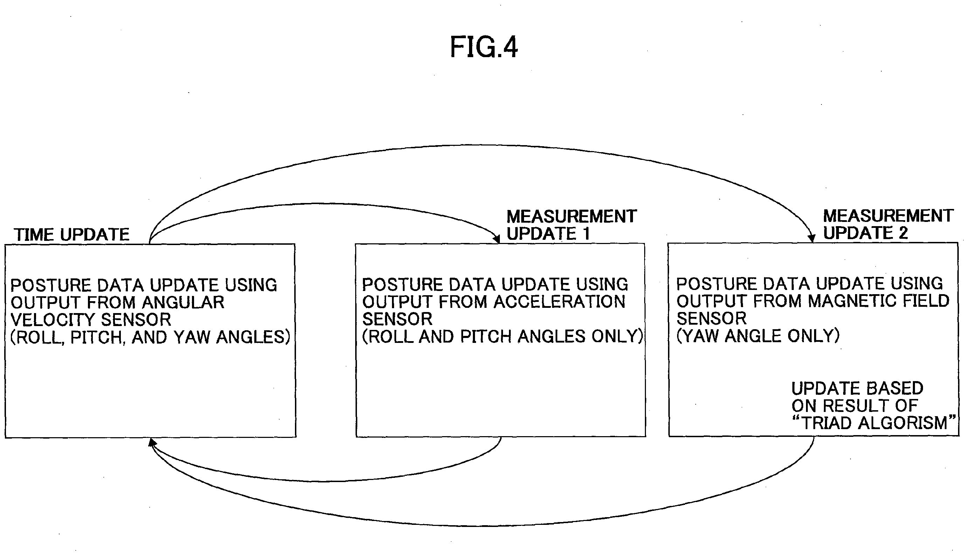

FIG. 4 is a drawing illustrating an overview of a procedure to calculate a posture.
FIG. 5 is a drawing illustrating an operation to calculate a posture (roll, pitch, and yaw angles) at the Time Update procedure.
FIG. 6 is a drawing illustrating an operation to calculate a posture (roll, pitch, and yaw angles) at the Time Update procedure.

FIG. 7 is a drawing illustrating an operation to calculate a posture (roll, pitch, and yaw angles) at the Time Update procedure.

FIG. 8 is a drawing illustrating an operation to calculate a posture (roll and pitch angles) at the First Measurement Update procedure.

FIG. 9 is a drawing illustrating an operation to calculate a posture (a yaw angle) at the Second Measurement Update procedure.

FIG. 10 is a drawing illustrating a procedure to detect a peak.

FIG. 11 is a drawing illustrating a procedure to calculate a horizontal component of moving velocity features.

FIG. 12 is a drawing illustrating a procedure to calculate a horizontal component of moving velocity features.

FIG. 13 is a drawing illustrating a determination procedure.

FIG. 14 is a drawing illustrating a procedure to determine variations of moving velocity in the horizontal direction.

FIG. 15 is a drawing illustrating a procedure to estimate traveling direction.

FIG. 16 is a drawing illustrating a procedure to calculate a posture using the TRIAD algorithm.

FIG. 17 is a block diagram of a functional configuration for an inertial device according to an embodiment of this invention.

FIG. 18 is a block diagram of a functional configuration of a velocity estimate unit for an inertial device according to an embodiment of this invention.

FIG. 19 is an example of a table stored in a parameter database managed in an inertial device according to an embodiment of this invention.

FIG. 20 is a drawing illustrating velocity waveforms generated by an inertial device according to an embodiment of this invention.

FIG. 21 is a drawing illustrating velocity waveforms combined by an inertial device according to an embodiment of this invention.

FIG. 22 is a block diagram of a functional configuration of an absolute positional data input unit, an absolute position estimate unit, and a map-matching unit for an inertial device according to an embodiment of this invention.

FIG. 23 is a drawing illustrating a relationship between a signal-to-noise ratio of radio field strength and an interval to receive radio signals.

FIG. 24 is a drawing illustrating a calculation of the current position in a time update procedure.

FIG. 25 is a drawing illustrating a calculation of the current position in a time update procedure.

FIG. 26 is a drawing illustrating a calculation of the current position in a time update procedure.

FIG. 27 is a drawing illustrating a calculation of the current position in a time update procedure.

FIG. 28 is a drawing illustrating an equation of the Extended Kalman Filter (prior art).

FIG. 29 is a drawing illustrating variables used in the Time Update procedure (prior art).

FIG. 30 is a drawing illustrating variables used in the Measurement Update procedure (prior art).

FIG. 31 is a drawing illustrating motion characteristics for walking in the vertical direction.

FIG. 32 is a drawing illustrating motion characteristics for walking in the horizontal direction.

FIG. 33 is a drawing illustrating a result of estimating velocities for walking motion.

FIG. 34 is a drawing illustrating a result of estimating positions for walking motion.

FIG. 35 is a drawing illustrating a result of estimating positions for walking motion.

FIG. 36 is a drawing illustrating a result of correcting estimated results using absolute positional data.

FIG. 37 is a drawing illustrating variation of an estimated value for a measurement error for walking motion.

Description of Embodiments

The invention will be described herein with reference to illustrative embodiments.

It is to be noted that, in the explanation of the drawings, the same components are given the same reference numerals, and explanations are not repeated.

1. Overview

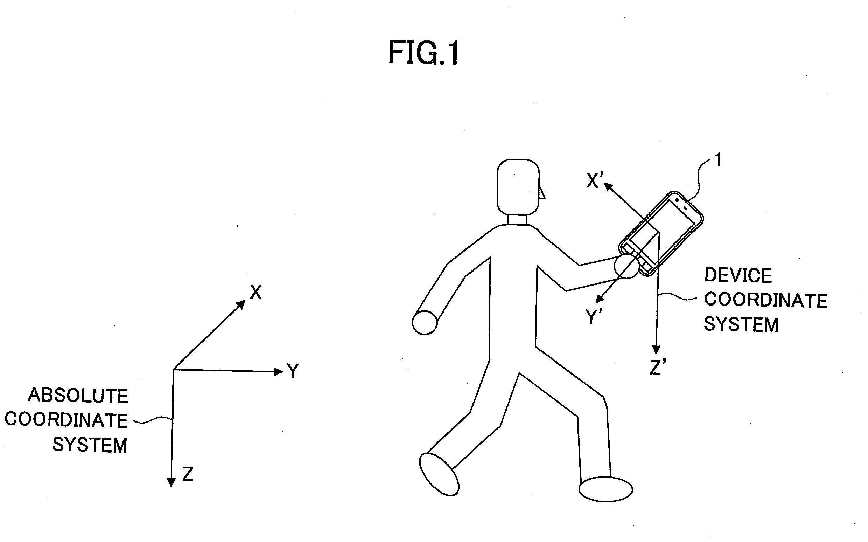

FIG. 1 is a drawing illustrating an overview of an inertial device according to an embodiment of this invention. FIG. 1 shows a user who walks with the inertial device 1. In the present specification, a direction to which the user walks is represented as the x-axis, a direction which is vertical to the x-axis and on a parallel with the ground is represented as the y-axis, and a direction which is vertical to both the x-axis and the y-axis is represented as the z-axis.

The inertial device 1 is portable and is carried by the user (e.g. a cell phone, a smartphone, a personal digital assistant or a notebook PC). The inertial device 1 has inertial sensors including an acceleration sensor and possibly further sensors (e.g. an angular velocity sensor, a magnetic field sensor, etc.), which is implemented in a common smartphone. The inertial device 1 may detect variations of acceleration and angular velocity and a direction of the inertial device 1.

The inertial device 1 according to an embodiment of the invention obtains acceleration sensor data on three axes (3 axis acceleration), and may obtain angular velocity on three axes (3 axis angular velocity), and strength of the magnetic field on three axes (3 axis magnetic field strength) as needed. A coordinate system depends on a device or sensor type, which is called the "device coordinate system". Thus, measured values obtained in the device coordinate system are converted into the an absolute coordinate system.

The inertial device 1 obtains converted acceleration (vector) in the absolute coordinate system. In particular, the inertial device 1 obtains a vertical component and a horizontal component of the acceleration (the converted 3 axis acceleration) from the sensor data by converting the coordinate system and removing gravity from the converted sensor data. The inertial device 1 may identify the time when one foot of the target passes the other foot after the pivot foot lands on the ground using waveforms indicating variations of the converted acceleration in the vertical direction of the converted 3 axis acceleration obtained and stored as needed. Since the time indicates that the time when the lower turning points (lower peaks) are shown in the waveform, the time is called a "peak time" or a "peak position".

Next, the inertial device 1 may integrate the horizontal component of the converted acceleration in a predetermined period around the peak position.' Here, the calculated values are referred to as a "horizontal component of the converted velocity vector". The inertial device 1 may determine that the obtained data indicates an actual walking motion (or a traveling action) of the target or not by using the calculated horizontal component of the converted velocity vector; a cycle of the moving action of the target; and the peak value of the vertical component of the converted acceleration or the peak amplitude (the value of peak acceleration in the vertical direction). Here, a cycle of the moving action of the target is called a "moving cycle". An example of the moving cycle is a human's walking cycle. In addition, the actual walking motion or the traveling action of the target is simply represented as the "walking motion" (including any actions other than "walking", though).

Next, when the inertial device 1 determines that the data derives from the actual walking motion, the inertial device 1 may combine the horizontal component of the converted velocity vectors around the time when the data is obtained, and the inertial device 1 may calculate a traveling direction vector indicating that the user takes a step as needed. Subsequently, the inertial device 1 may estimate a traveling direction indicated by combination of the last traveling direction vector and the previous direction vector.

In this way, since the inertial device 1 may estimate a traveling direction without Fourier transformation (FT) or principal component analysis, the inertial device 1 does not need to perform high rate sensor sampling due to low frequency of the acceleration signal for the walking motion of the target. In addition, since the inertial device 1 does not need to perform FT for a plurality of walking steps, an accuracy of the estimated traveling direction per step and a response of the estimation are improved. It makes it possible to reduce costs and downside the device.

Furthermore, since the way to hold the inertial device for the user is not limited, the usability may be improved. That merit is especially advantageous when the inertial device provides a navigational function for the user.

The inertial device 1 may be implemented as a device such as a music player, a health monitor, a watch, etc. other than the above-mentioned device. In addition, the inertial device 1 may be incorporated into another device (e.g. a walking robot or a collar for an animal). It makes it possible to estimate a traveling direction of various types of creatures or objects which makes a motion in the vertical direction within a certain cycle.

## 2. Hardware Configuration

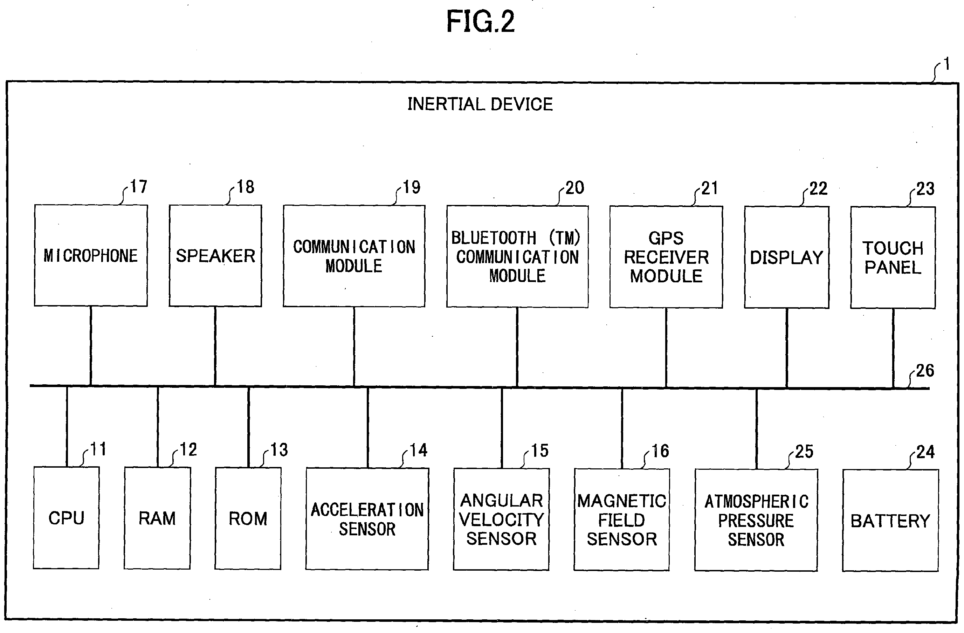

FIG. 2 is a drawing illustrating an overview of a configuration for the inertial device 1 according to an embodiment of this invention. In the example shown in FIG. 2, the inertial device 1 is implemented as a mobile device such as a smartphone.

The inertial device 1 has a CPU 11, a RAM 12, a ROM 13, an acceleration sensor 14, an angular velocity sensor 15, a magnetic field sensor 16, a microphone 17, a speaker 18, a communication module 19, a Bluetooth (TM) communication module 20, a GPS receiver module 21, a display 22, a touch panel 23, a battery 24, an atmospheric pressure sensor 25, and a bus 26.

The CPU 11 may execute programs controlling the inertial device 1. The RAM 12 may work as a work area for the CPU 11. The ROM 13 may store the programs executed by the CPU 11 and data required to execute the programs. The acceleration sensor 14 may detect acceleration in the X'-axis, Y'-axis, and Z'-axis directions in the device coordinate system used by the inertial device 1. The angular velocity sensor 15 (or a gyroscope) may detect angular velocity in the X'-axis, Y'-axis, and Z'-axis directions in the device coordinate system used by the inertial device 1. The magnetic field sensor 16 may output a 3 dimensional vector causing the compass to point north and may be used to detect an aspect of the inertial device 1. The atmospheric pressure sensor 25 may measure an air pressure and detect altitude of the inertial device 1.

The microphone 17 may convert a voice into an electronic signal. The speaker 18 may output an electronic signal as a sound. The communication module 19 may communicate with other devices connected via a 3G network and/or a wireless LAN. The Bluetooth (TM) communication module 20 may communicate with other devices using Bluetooth protocols. The GPS receiver module 21 may receive positioning signals transmitted from GPS satellites or Indoor Messaging System (IMES) transmitters.

The display 22 may provide a screen for a user. The touch panel 23 may accept input from the user. The battery 24 may supply power to the inertial device 1. The bus 26 may connect the above-mentioned devices (except the battery 24) with each other.

The microphone 17, the speaker 18, the communication module 19, the Bluetooth (TM) communication module 20, the GPS receiver module 21, the display 22, the touch panel 23, and the atmospheric pressure sensor 25 are optional elements for the inertial device 1. For example, when the inertial device 1 is implemented as a health monitor which does not have a display screen, the inertial device 1 does not need to have such components modules.

Alternatively, the inertial device 1 may have a communication device according to other communication protocols (e.g. ZigBee (TM)) instead of the Bluetooth (TM) communication module 20.

## 3. Functions

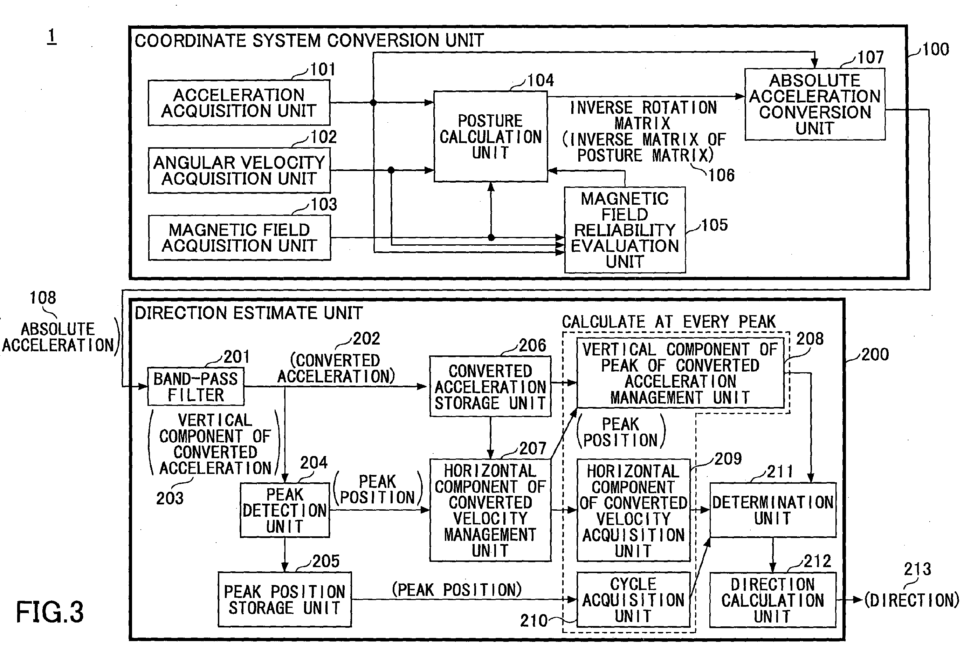

FIG. 3 is a block diagram of a functional configuration for the inertial device 1. The functions of the inertial device 1 may be roughly divided into a "Change of Coordinate Systems" function and an "Estimation for Travelling Direction" function.

### 3.1 Change of Coordinate Systems

A coordinate system conversion unit 100, which performs a conversion of a coordinate system on the inertial device 1, has an acceleration acquisition unit 101, an angular velocity acquisition unit 102, a magnetic field acquisition unit 103, a posture calculation unit 104, a magnetic field reliability evaluation unit 105, and an absolute acceleration conversion unit 107. The coordinate system conversion unit 100 converts 3 axis acceleration obtained from the acceleration sensor 104 in the device coordinate system into absolute acceleration in the absolute coordinate system.

The absolute coordinate system is used to handle coordinate values measured by various kinds of sensors, which includes the World Geodetic System 1984 (WGS84) used by GPS and the Orthogonal Coordinate System such as the Universal Transverse Mercator Coordinate (UTM) System. Thus, in the absolute coordinate system, a position or a direction of a target may be represented by a distance relationship from the origin which is fixed in a space. The absolute coordinate system is called the "World Coordinate System". On the other hand, the device coordinate system is called the "Body Coordinate System", which defines the origin at a point inside the inertial device 1 and three axes (i.e. x-axis, y-axis, and z-axis) which are orthogonal to each other.

The acceleration acquisition unit 101 may acquire variation of the three-axis acceleration detected by the acceleration sensor 14.

The angular velocity acquisition unit 102 may obtain variation of the three-axis angular velocity detected by the angular velocity sensor 15. Here, the angular velocity may be acquired in the device coordinate system in common with the acceleration.

The magnetic field acquisition unit 103 may acquire the three-dimension magnetic field vector pointing to the magnetic north, which is detected by the magnetic field sensor 16. In this way, the magnetic field acquisition unit 103 may get a direction of the inertial device 1. Here, the direction may be acquired in the device coordinate system in common with the acceleration.

The posture calculation unit 104 may calculate the current posture of the inertial device 1 using the sensor data obtained by the acceleration acquisition unit 101, the angular velocity acquisition unit 102, and the magnetic field acquisition unit 103, and the posture calculation unit 104 may calculate an inverse rotation matrix 106 by an inverse matrix calculation to the calculated posture data (a rotation matrix).

The data obtained by the magnetic field acquisition unit 103 may be unreliable due to an environmental magnetic field in an in-door environment. Thus, the posture calculation unit 104 may use the data obtained by the magnetic field acquisition unit 103 only when the magnetic field reliability evaluation unit 105 (explained later) determines that the data is reliable.

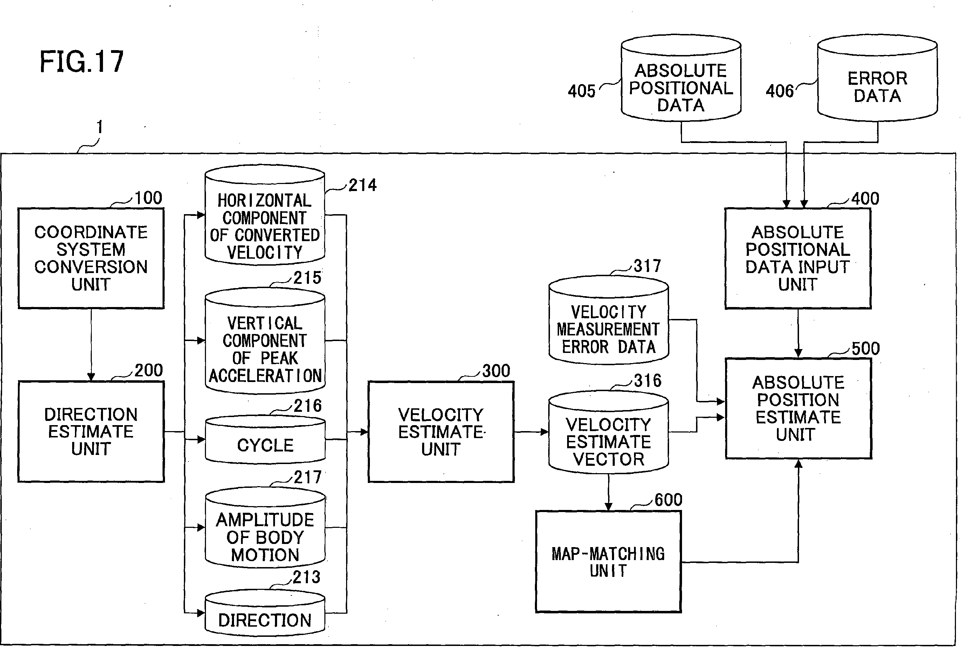

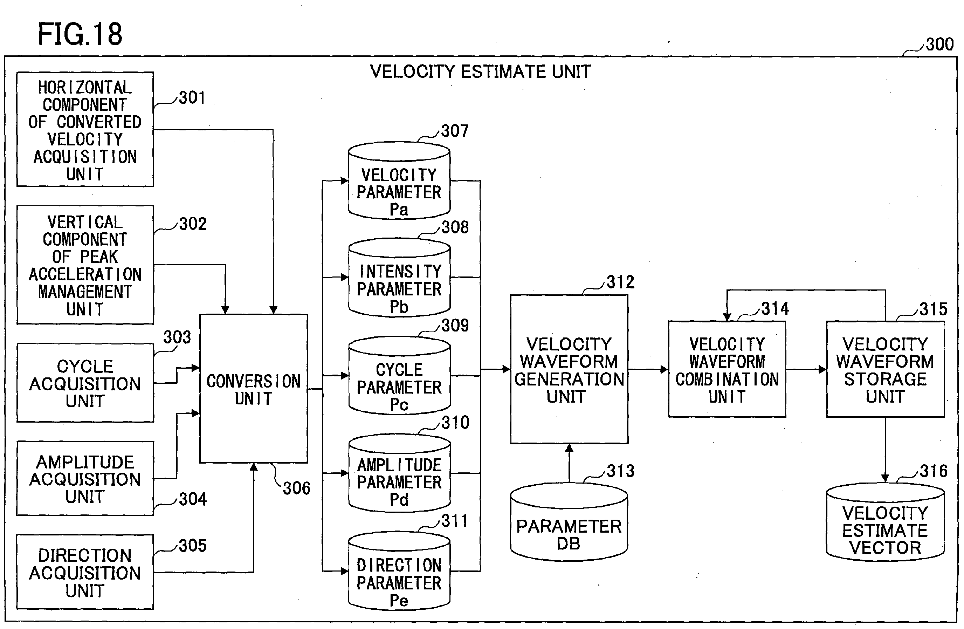

The posture calculation unit 104 may calculate a matrix representing the posture of the inertial device 1 using the Extended Kalman Filter, which is commonly used in the art (See Non-Patent Documents 1, 2, FIGs. 17, 18), and the posture calculation unit 104 may invert the matrix. The detailed procedure is explained below.

### General Equations of the Extended Kalman Filter

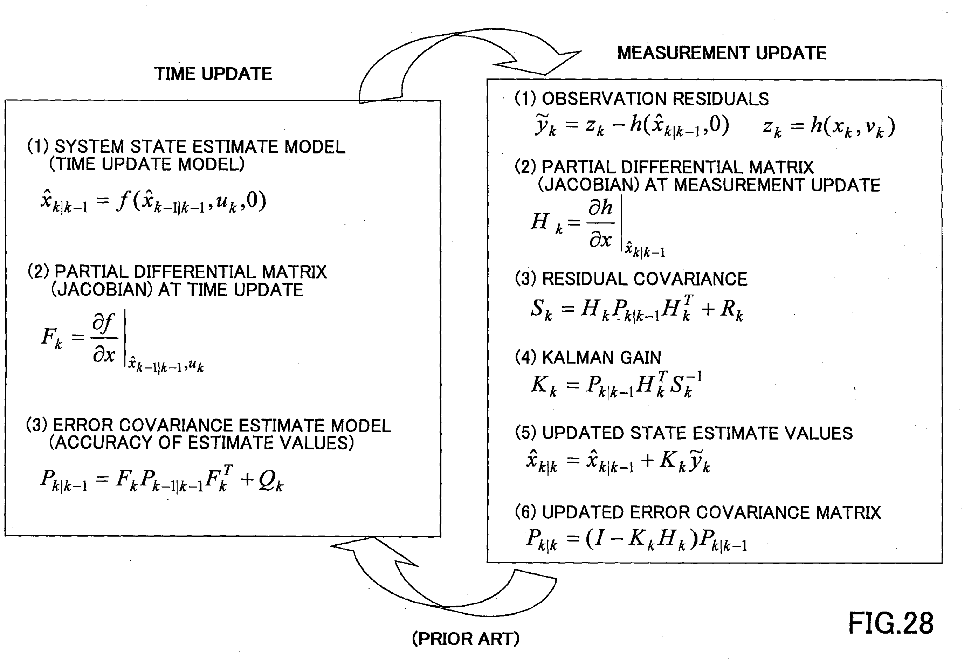

FIG. 28 is a drawing illustrating an equation of the Extended Kalman Filter. In the calculation of the Kalman Filter, "Time Update" and "Measurement Update" procedures are executed in order to forward a time step. In the Time Update procedure, an estimated state at the present time is calculated from an estimated state at a previous time. In the Measurement Update procedure, the estimated values are corrected using a measurement at the present time and thereby a more precise state may be estimated. By repeating such procedures, the optimal state variables are estimated.

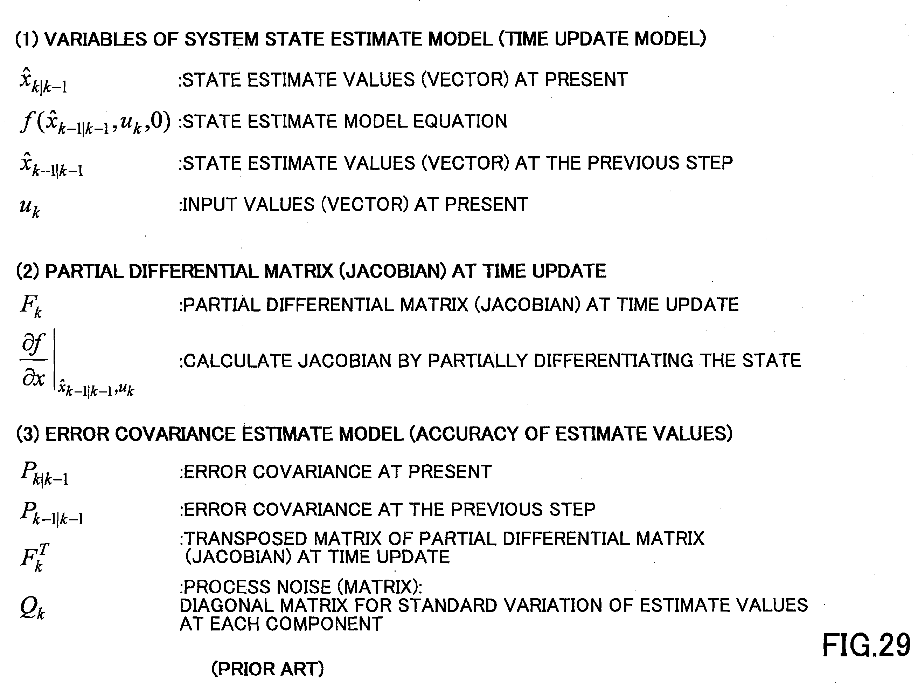

FIG. 29 is a drawing illustrating variables used in the Time Update procedure (prior art). The variables are explained, which correspond to the equations (1) - (3) in the frame named "Time Update" as shown in FIG. 28. Here, "k" indicates a discrete step time, and "k-1" indicates time at the previous step.

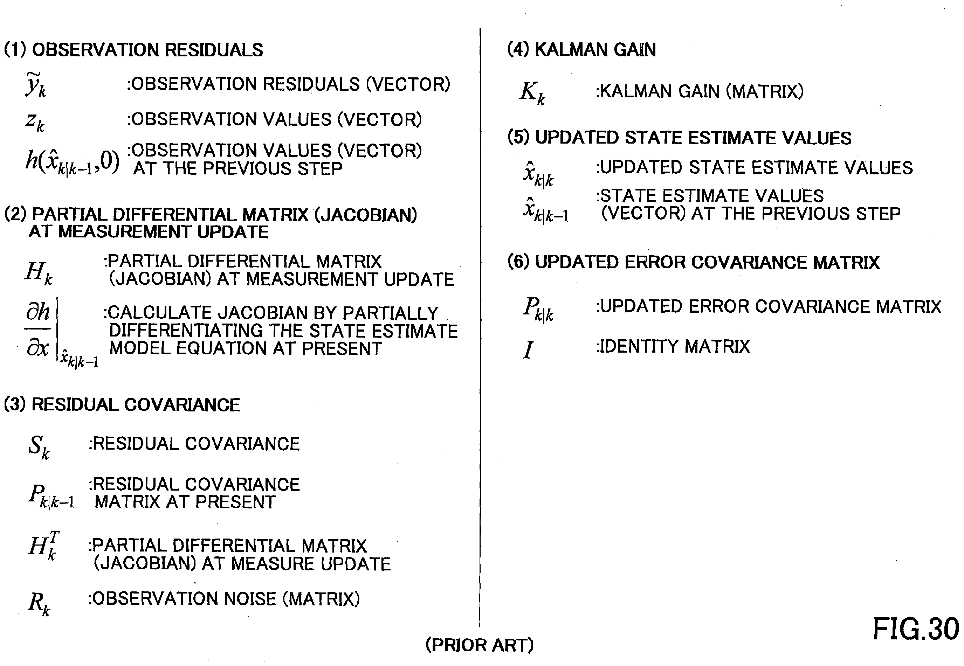

FIG. 30 is a drawing illustrating variables used in' the Measurement Update procedure. The variables are explained, which correspond to the equations (1) - (6) in the frame named "Measurement Update" as shown in FIG. 28.

Application of the Extended Kalman Filter

The posture calculation unit 104 may use the Time Update procedure in the Extended Kalman Filter to update the posture data derived from the angular velocity sensor 15 (roll, pitch, and yaw angles). In addition, the posture calculation unit 104 may use the Measurement Update procedure in the Extended Kalman Filter to update the posture data derived from the acceleration sensor 14 (roll and pitch angles) (hereinafter called the "first measurement update procedure"). Furthermore, the posture calculation unit 104 may use the Measurement Update procedure to update the posture data derived from the magnetic field sensor 16 (a yaw angle) (hereinafter called the "second measurement update procedure").

In this way, the posture calculation unit 104 may form a seven state Extended Kalman Filter. The posture calculation unit 104 may repeatedly execute the Time Update procedure and the two Measurement Update procedures in parallel and estimate the posture and a gyro zero point bias value. The posture is represented using a quaternion (vector) as shown below.

$$\mathbf{q} = \begin{bmatrix} w \\ x \\ y \\ z \end{bmatrix} = \begin{bmatrix} q_0 \\ q_1 \\ q_2 \\ q_3 \end{bmatrix}$$

The quaternion vector has four variables and may represent a posture of an object. A posture representation using roll, pitch and yaw angles has a problem about a singularity called "Gimbal Lock", but the quaternion may represent any posture without the singularity. The gyro zero point bias value may be represented using three variables $bx_k$, $by_k$, $bz_k$ corresponding to three axes (b is a constant).

In the following, the above-mentioned three procedures (1) to (3) are explained.

The Time Update Procedure

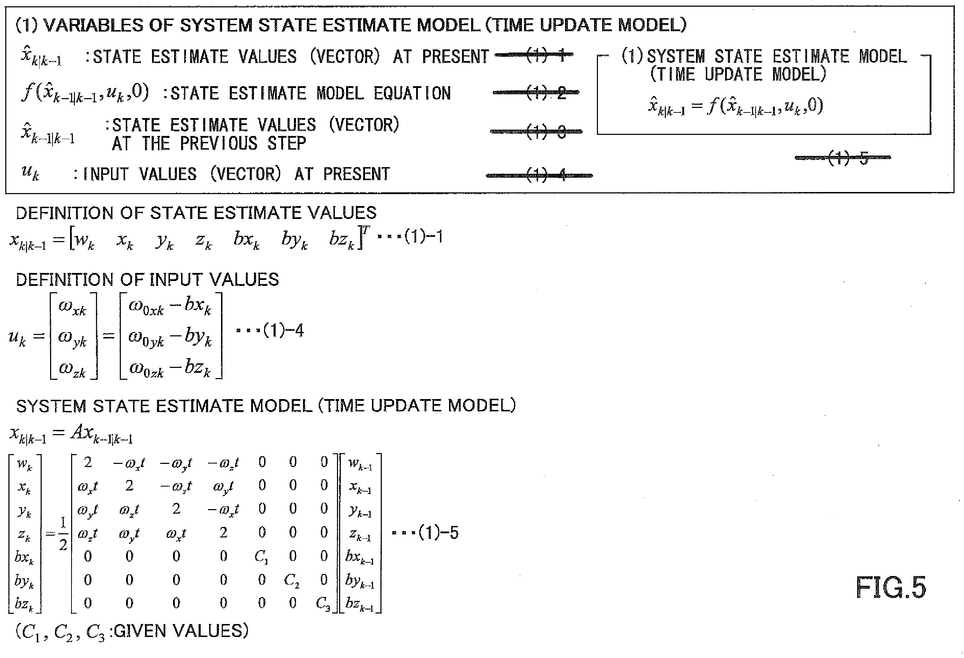

First, with reference to FIGs. 5 - 7, the time update procedure in the Extended Kalman Filter is explained. The posture calculation unit 104 may execute the procedure and perform time integration according to the time update procedure in the Extended Kalman Filter using gyro output values as input in a state estimation model explained later. In this way, the updated quaternion vector q and an error covariance matrix P are obtained (roll, pitch, and yaw angles).

FIG. 5 is a drawing illustrating (1) variables of the system state estimate model according to an embodiment of the invention in the general equation of the Extended Kalman Filter. Here, the state estimate values at the present are defined as the equation (1)-1 in FIG. 5 using the quaternion vector and the gyro zero point bias value.

$$x_{k|k-1} = \begin{bmatrix} w_k & x_k & y_k & z_k & bx_k & by_k & bz_k \end{bmatrix}^T$$

The input values $u_k$ are defined as the equation (1)-4 in FIG. 5 using the output values ($\omega_{0xk}$, $\omega_{0yk}$, $\omega_{0zk}$) (rad/sec) of the angular velocity sensor.

$$u_k = \begin{bmatrix} \omega_{xk} \\ \omega_{yk} \\ \omega_{xk} \end{bmatrix} = \begin{bmatrix} \omega_{0xk} - bx_k \\ \omega_{0yk} - by_k \\ \omega_{0zk} - bz_k \end{bmatrix}$$

Thus, the values ($\omega_{0xk}$, $\omega_{0yk}$, $\omega_{0zk}$) indicate angular velocity in which zero point values are substituted and there is no offset. The system state estimation model is represented as the equation (1)-5 in FIG. 5 where $C_1$, $C_2$, $C_3$ are constant.

$$\begin{bmatrix} w_k \\ x_k \\ y_k \\ z_k \\ bx_k \\ by_k \\ bz_k \end{bmatrix} = \frac{1}{2} \begin{bmatrix} 2 & -\omega_x t & -\omega_y t & -\omega_z t & 0 & 0 & 0 \\ \omega_x t & 2 & -\omega_z t & \omega_y t & 0 & 0 & 0 \\ \omega_y t & \omega_z t & 2 & -\omega_x t & 0 & 0 & 0 \\ \omega_z t & \omega_y t & \omega_x t & 2 & 0 & 0 & 0 \\ 0 & 0 & 0 & 0 & C_1 & 0 & 0 \\ 0 & 0 & 0 & 0 & 0 & C_2 & 0 \\ 0 & 0 & 0 & 0 & 0 & 0 & C_3 \end{bmatrix} \begin{bmatrix} w_{k-1} \\ x_{k-1} \\ y_{k-1} \\ z_{k-1} \\ bx_{k-1} \\ by_{k-1} \\ bz_{k-1} \end{bmatrix}$$

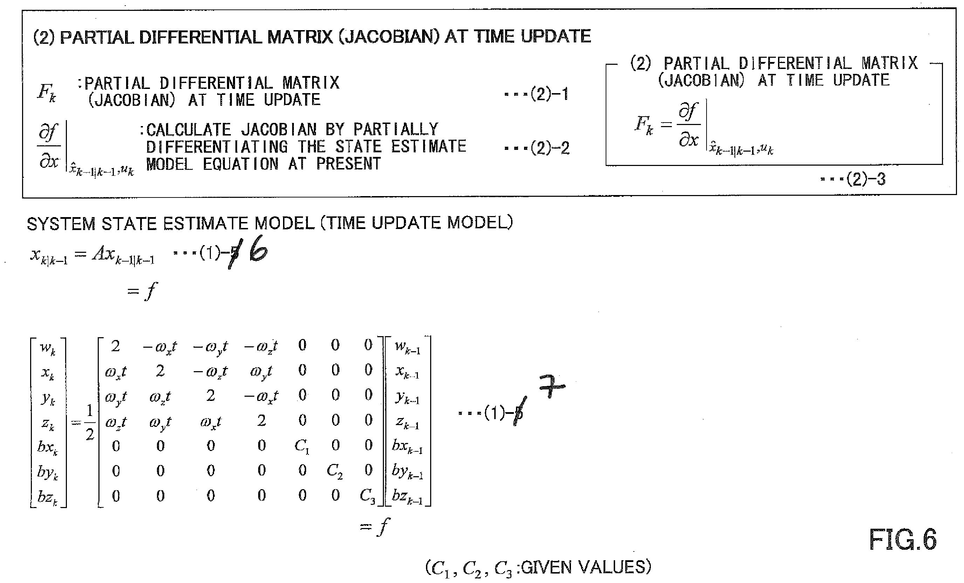

FIG. 6 is a drawing illustrating a (2) partial differential matrix (Jacobian) at the time update procedure according to an embodiment of the invention in the general equation of the Extended Kalman Filter. As shown in FIG. 5, the system state estimation model is represented as the equations (1)-6 and (1) - 7. A right side of the equation (1)-6 and (1) - 7 is "f". Thus, the partial differential on the right results in the partial differential matrix in the time update procedure.

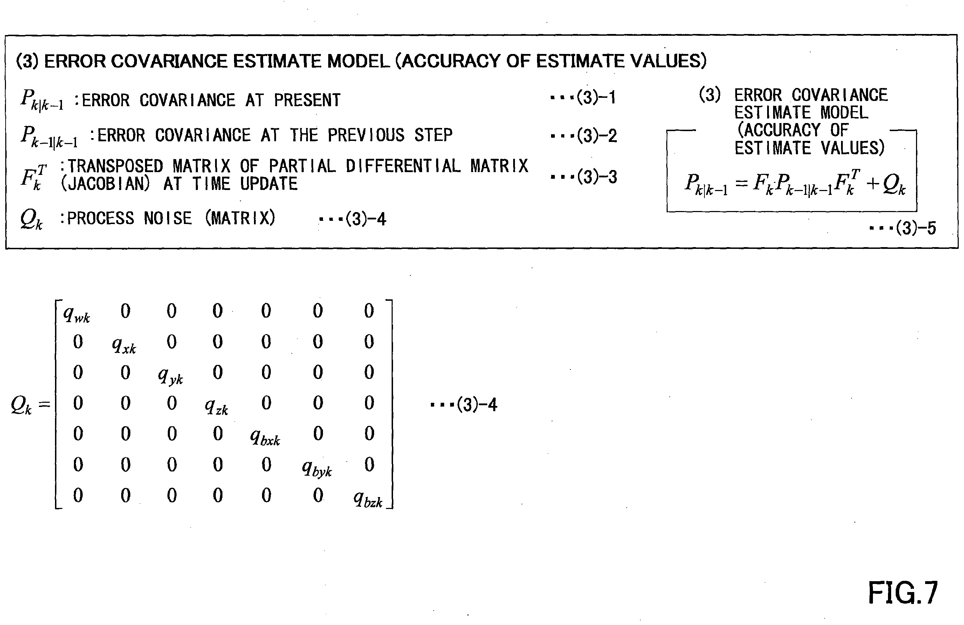

FIG. 7 is a drawing illustrating an error covariance estimate model $P_{k|k-1}$ according to an embodiment of the invention in the general equation of the Extended Kalman Filter. Process noise $Q_k$ is determined in a system identification process in advance.

$$Q_k = \begin{bmatrix} q_{wk} & 0 & 0 & 0 & 0 & 0 & 0 \\ 0 & q_{xk} & 0 & 0 & 0 & 0 & 0 \\ 0 & 0 & q_{yk} & 0 & 0 & 0 & 0 \\ 0 & 0 & 0 & q_{zk} & 0 & 0 & 0 \\ 0 & 0 & 0 & 0 & q_{bxk} & 0 & 0 \\ 0 & 0 & 0 & 0 & 0 & q_{byk} & 0 \\ 0 & 0 & 0 & 0 & 0 & 0 & q_{bzk} \end{bmatrix}$$

The error covariance matrix at the present time $P_{k|k-1}$ may be calculated using the process noise $Q_k$, the error covariance matrix at the previous step, the partial differential matrix (Jacobian) in the time update procedure $F_k$, and its transposed matrix $F_k^T$ (the equation (3)-5 in FIG. 7). The error covariance matrix at the present time $P_{k|k-1}$ and the matrix $P_{k-1|k-1}$ have 7x7 elements which are real.

The posture calculation unit 104 may execute the time update procedure in the Extended Kalman Filter using the above mentioned model and variables; calculate the posture of the inertial device 1 in the absolute coordinate system; and calculate the inverse rotation matrix of the matrix indicating the posture.

The First Measurement Update Procedure

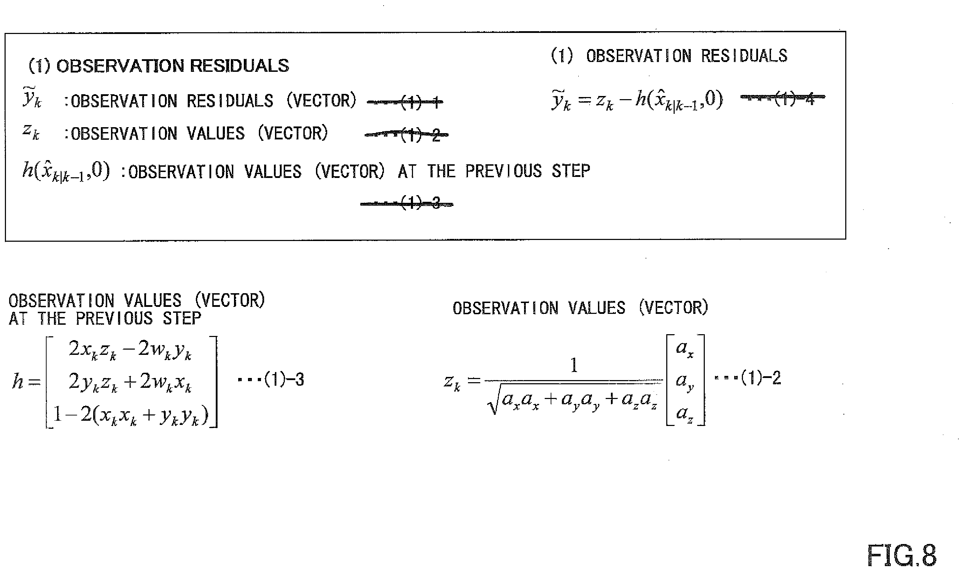

FIG. 8 shows a drawing illustrating the first measurement update procedure in the Extended Kalman Filter. By executing the procedure, the posture calculation unit 104 may compare angular data in the horizontal direction obtained by the acceleration acquisition unit 101 with horizontal angular data of the present quaternion vector, and the posture calculation unit 104 may correct the difference.

FIG. 8 shows variables included in observation residuals (1) in the general equation of the Extended Kalman Filter.

$\tilde{y}_k$

First, the observation values (vector) at the previous step h are represented as the equation (1)-3 in FIG. 8.

$$h = \begin{bmatrix} 2x_k z_k - 2w_k y_k \\ 2y_k z_k + 2w_k x_k \\ 1 - 2(x_k x_k + y_k y_k) \end{bmatrix}$$

The elements included in the above equation derive from a three dimensional rotation matrix (4x4) and the elements are predetermined. The observation values (vector) $z_k$ is represented as the equation (1)-2 in FIG. 8.

$$z_k = \frac{1}{\sqrt{a_x a_x + a_y a_y + a_z a_z}} \begin{bmatrix} a_x \\ a_y \\ a_z \end{bmatrix}$$

Here, the values ($a_x$, $a_y$, $a_z$) are output from the acceleration sensor 14, which are obtained by the acceleration acquisition unit 101. Using the above-mentioned h and $z_k$, the observation residuals are calculated as shown below.

$\tilde{y}_k$

The partial differential matrix (Jacobian) in the Measurement Update procedure $H_k$ in the general equation of the Extended Kalman Filter (1) is obtained by calculating the partial differential of the observation values h shown in the equation (1)-3 in FIG. 8.

The residual covariance $S_k$ in the general equation of the Extended Kalman Filter is calculated using the observation noise (matrix) $R_k$, the partial differential matrix in the Measurement Update procedure $H_k$, its transposed matrix $H_k^T$, and the error covariance matrix at the present time $P_{k|k-1}$.

$$R_k = \begin{bmatrix} r_1 & 0 & 0 \\ 0 & r_2 & 0 \\ 0 & 0 & r_3 \end{bmatrix}$$

Here, the values ($r_1$, $r_2$, $r_3$) are variances which are determined in a device evaluation process for the acceleration sensor 14 in advance.

The Kalman gain $K_k$ in the general equation of the Extended Kalman Filter is calculated using the error covariance matrix $P_{k|k-1}$ at the present time, the transposed matrix of the partial differential matrix in the Measurement Update procedure $H_k^T$, and the inverse matrix of the residual covariance $S_k^{-1}$. The $K_k$ has 7x3 elements, which are actual numbers.

Similarly, the state estimate values $x_{k|k}$ and the updated error covariance matrix $P_{k|k}$ in the general equation of the Extended Kalman Filter are calculated using the above-mentioned variables.

The posture calculation unit 104 may execute, using the above-mentioned model and variables, the Measurement Update procedure in the Extended Kalman Filter; compare the angle data in the horizontal direction with the horizontal angle data of the present quaternion vector; and correct the difference (for roll and pitch angles only).

The Second Measurement Update Procedure

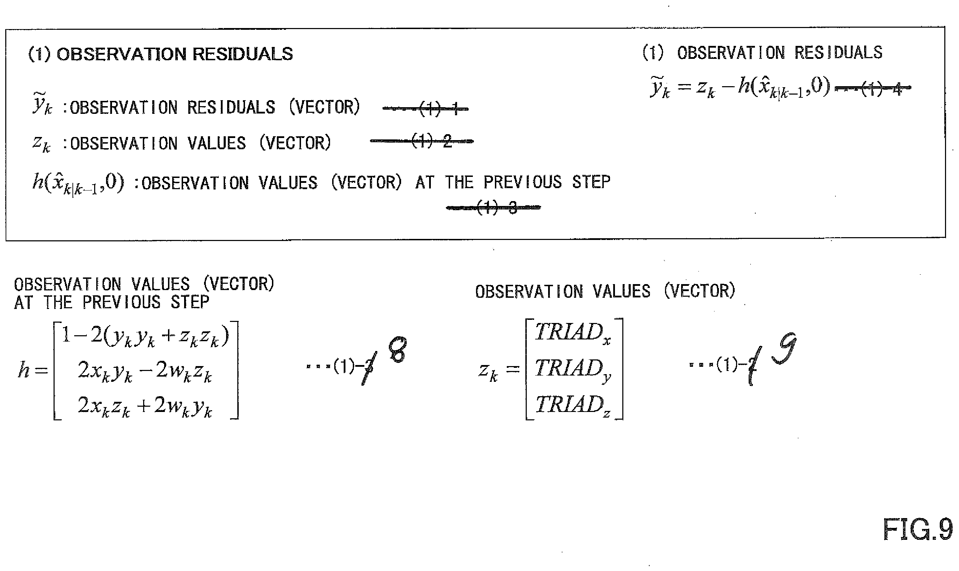

FIG. 9 is a drawing illustrating the second measurement update of the Extended Kalman Filter. The posture calculation unit 104 may receive a notification indicating that data obtained by the magnetic field acquisition unit 103 is reliable from the magnetic field reliability evaluation unit 105 (explained later). When the data from the magnetic field acquisition unit 103 is reliable, the posture calculation unit 104 may execute the second Measurement Update procedure using a yaw angle calculated from the posture data, which is obtained through the TRIAD algorithm, to correct the yaw angle component of the quaternion vector. The TRIAD algorithm is explained later.

FIG. 9 shows, in common with FIG. 8, variables included in observation residuals (1) in the general equation of the Extended Kalman Filter.

$\tilde{y}_k$

In common with FIG. 8, the observation values (vector) at the previous step h are represented as the equation (1)-8 in FIG. 9. On the other hand, the observation values (vector) $z_k$ are represented as the equation (1) - 9 in FIG. 9.

$$z_k = \begin{bmatrix} TRIAD_x \\ TRIAD_y \\ TRIAD_z \end{bmatrix}$$

The above vector indicates a yaw angle direction calculated by the TRIAD algorithm.

In common with the first Measurement Update procedure, the partial differential matrix (Jacobian) in the Measurement Update $H_k$ in the general equation of the Extended Kalman Filter is obtained by calculating the partial differential of the observation values at the previous step h.

The residual covariance $S_k$ in the general equation of the Extended Kalman Filter is calculated using the observation noise (matrix) $R_k$, the partial differential matrix in the Measurement Update $H_k$, its transposed matrix $H_k^T$, and the error covariance matrix at the present time $P_{k|k-1}$.

$$R_k = \begin{bmatrix} T_1 & 0 & 0 \\ 0 & T_2 & 0 \\ 0 & 0 & T_3 \end{bmatrix}$$

Here, the values $(T_1, T_2, T_3)$ are variances which are determined in a device evaluation process for the magnetic field sensor 16 in advance.

In addition, the Kalman gain $K_k$, the updated state estimate values $x_{k|k}$, and the updated error covariance matrix $P_{k|k}$ are calculated in common with the first Measurement Update procedure.

The magnetic field reliability evaluation unit 105 may determine that the magnetic field vector acquired from the magnetic field sensor 16 via the magnetic field acquisition unit 103 is reliable, and the magnetic field reliability evaluation unit 105 may transmit the result to the posture calculation unit 104. It is known that the accuracy of the sensor data from the magnetic field sensor 16 may decrease depending on variation of the earth magnetism and environmental magnetic field surrounding the sensor device. The magnetic field reliability evaluation unit 105 may evaluate the effect and determine that the sensor data is reliable or not. In the following, the determination process is explained.

The magnetic field reliability evaluation unit 105 obtains first posture data (quaternion) which is the latest posture data which has been acquired via the above mentioned procedure. Next, the magnetic field reliability evaluation unit 105 acquires second posture data (quaternion) using reference vectors of the acceleration and the earth magnetism and magnetic field vectors obtained by the magnetic field acquisition unit 103 according to the TRIAD algorithm. The reference vectors of the acceleration and the earth magnetism representing the vertical downward direction are factory-configured or configured by the user.

Calculation of a Posture Using TRIAD Algorithm

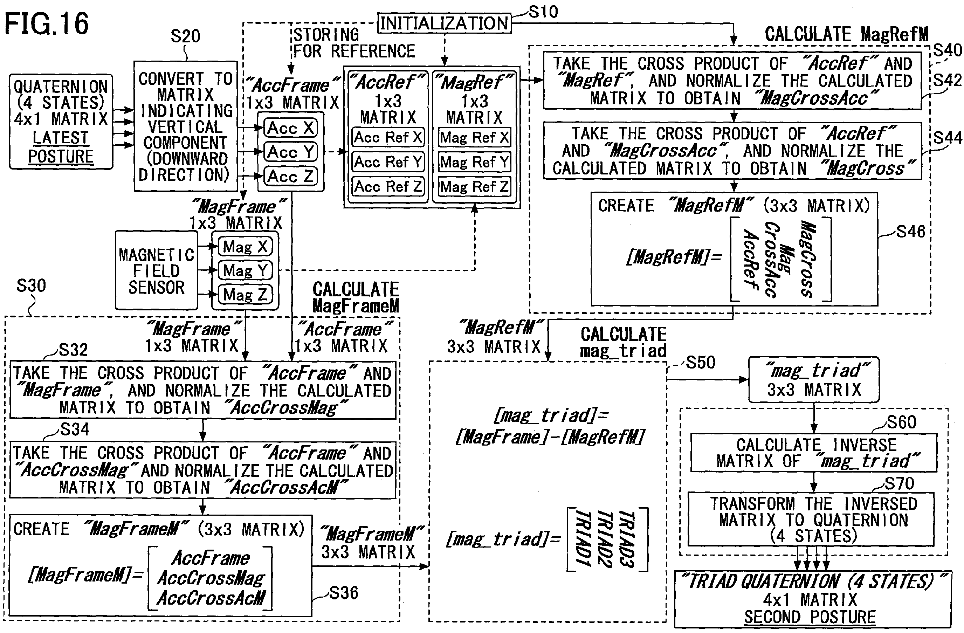

FIG. 16 is a drawing illustrating a procedure, which is performed by the magnetic field reliability evaluation unit 105, to calculate the second posture data according to the known TRIAD algorithm.

At step S10, an initialization process is performed before the device is shipped or in response to a user's instruction, and reference vectors AccRef and MagRef are stored. The AccRef indicates the vertical downward component of acceleration, and the MagRef is a magnetic field vector. The vector indicating the vertical downward component of acceleration may be calculated from the quaternion as explained at the following step S20. The magnetic field vector points to the compass north input from the magnetic field sensor. That step is only performed before the device is shipped or in response to a user's instruction. Thus, the reference vector keeps the same values unless the initialization process is executed.

At step S20, the magnetic field reliability evaluation unit 105 converts the latest quaternion vector (4x1) indicating the latest posture of the inertial device 1 into a 1x3 (i.e. 1 row, 3 columns) matrix AccFrame indicating the vertical component (downward direction).

At step S30, the magnetic field reliability evaluation unit 105 calculates a 3x3 matrix MagFrameM using the AccFrame and a matrix MagFrame indicating a magnetic field vector acquired by the magnetic field sensor.

At step S32, the magnetic field reliability evaluation unit 105 calculates a matrix AccCrossMag by taking the cross product of the AccFrame and the MagFrame and normalizing the calculated result.

At step S34, the magnetic field reliability evaluation unit 105 calculates a matrix AccCrossAcM by taking the cross product of the AccFrame and the AccCrossMag and normalizing the calculated result.

At step S36, the magnetic field reliability evaluation unit 105 calculates a 3x3 matrix MagFrameM by using the AccFrame, the AccCrossMag calculated at step S32, and the AccCrossAcM calculated at step S34.

At step S40, the magnetic field reliability evaluation unit 105 calculates a 3x3 matrix MagRefM using the AccRef and the MagRef.

At step S42, the magnetic field reliability evaluation unit 105 calculates a matrix MagCrossAcc by taking the cross product of the AccRef and the MagRef and normalizing the calculated result.

At step S44, the magnetic field reliability evaluation unit 105 calculates a matrix MagCross by taking the cross product of the AccRef and the MagCrossAcc and normalizing the calculated result.

At step S46, the magnetic field reliability evaluation unit 105 creates a 3x3 matrix MagRefM by combining the AccRef, the MagCrossAcc calculated at step S42, and the MagCross calculated at step S44, which are transposed respectively.

Step S40 (S42 - S46) may be performed when the AccRef and the MagRef are changed after the initialization. Thus, the magnetic field reliability evaluation unit 105 may re-use the stored MagRefM until initialization is performed again.

At step S50, the magnetic field reliability evaluation unit 105 acquires the inner product of the MagFrame and the MagRefM. The acquired matrix is called a "mag_triad" (3x3). The mag_triad is used to convert the device coordinate system to the absolute coordinate system. In the TRIAD algorithm, three columns are called TRIAD1, TRIAD2, and TRIAD3 respectively.

At step S60, the magnetic field reliability evaluation unit 105 inverts the mag_triad (a matrix for conversion between the absolute coordinate system and the device coordinate system) and converts the inverted mag_triad to the quaternion. The quaternion indicates the second posture data.

The magnetic field reliability evaluation unit 105 compares a differential value of the first posture data with a differential value of the second posture data calculated by the above-mentioned steps to determine if a difference exists. When there is no difference (i.e. the difference of the differential values is smaller than a threshold value), the magnetic field reliability evaluation unit 105 determines that the data (earth magnetism) acquired by the magnetic field sensor 16 is reliable.

In addition, the magnetic field reliability evaluation unit 105 may improve the accuracy of such an evaluation by using the following criteria:

- whether the absolute value of the magnetic field vector is within a predetermined range;
- whether depression acquired from the first posture data and the magnetic field vector is within a predetermined range; and
- whether depression acquired from the second posture data and the magnetic field vector is within a predetermined range.

The range may be defined using depression data and amplitude of the magnetic field vector issued by the Japan Geographical Survey Institute.

When the earth magnetism data is reliable, the second Measurement Update procedure is executed using the yaw angle calculated from the second posture data. Otherwise, the second Measurement Update procedure is not executed.

The absolute acceleration conversion unit 107 multiply the acceleration obtained by the acceleration acquisition unit 101 by the inverse rotation matrix 106 calculated by the posture calculation unit 104 to calculate three axis acceleration in the absolute coordinate system.

3.2 Estimation for Travelling Direction

Direction estimation unit 200 as shown in FIG. 3, which executes the "Estimation for Travelling Direction" function, includes a band-pass filter 201, a peak detection unit 204, a peak position storage unit 205, a converted acceleration storage unit 206, a horizontal component of the converted velocity management unit 207, a vertical component of peak converted acceleration management unit 208, a horizontal component of the converted velocity acquisition unit 209, a cycle acquisition unit 210, a determination unit 211, and a direction calculation unit 212.

The direction estimation unit 200 may calculate a traveling direction of the target for each step based on acceleration obtained by the coordinate system conversion unit 100 in the absolute coordinate system.

The band-pass filter 201 may remove a gravity component from the three axis absolute acceleration output by the coordinate system conversion unit 100. For example, a passband may be about 1-3 Hz which is a general frequency for a walking motion. Note that the passband may vary depending on a frequency for a walking or traveling motion of the target of the inertial device 1. Here, the absolute acceleration in which the gravity component is removed is called a "converted acceleration 202", which is output by the band-pass filter 201. The converted acceleration 202 may be stored in the converted acceleration storage unit 206. In addition, a vertical component of the converted acceleration is represented as a "vertical component of converted acceleration 203". The vertical component of converted acceleration 203 is conveyed to the peak detection unit 204 (explained later).

The peak detection unit 204 may measure the variation (time variation) at the vertical component of converted acceleration 203 of the converted acceleration 202 output by the band-pass filter 201 and detect a lower turning point (peak time or peak positions) of the waveform. The detected peak position is stored in the peak position storage unit 205 (explained later). In the following, a detection method for the lower turning point is explained.

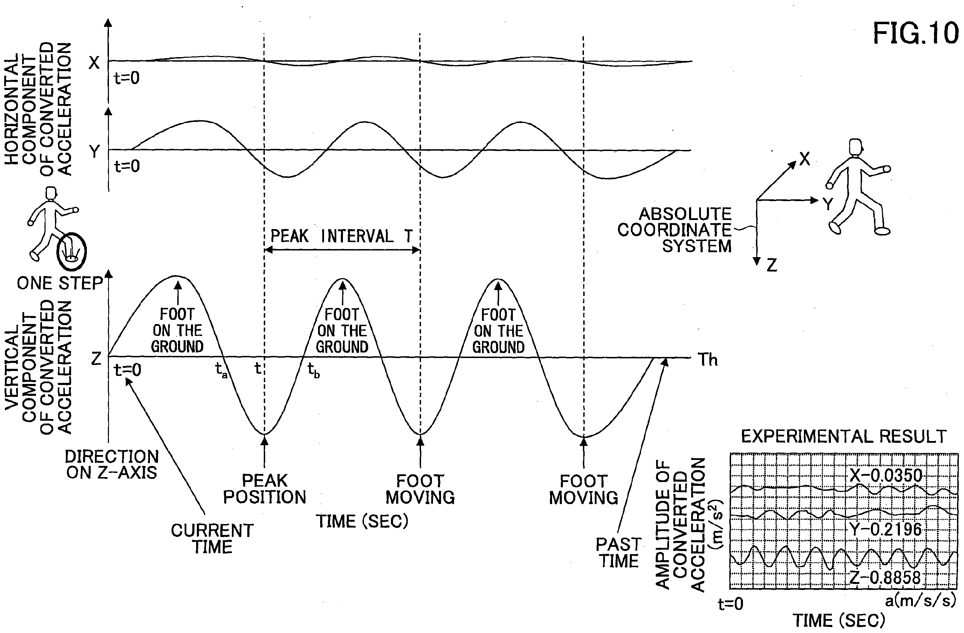

FIG. 10 shows waveforms indicating variation of the vertical component of converted acceleration 203 (Z) and the horizontal component of the converted acceleration (X, Y) where the abscissa axis indicates time (second). As shown in FIG. 10, each waveform has a cycle corresponding to the moving cycle (e.g. the walking cycle). In particular, the waveform of the vertical component of converted acceleration 203 has a bigger amplitude (from -1 m/s$^2$ to 1 m/s$^2$) compared to the horizontal component. The upper turning point appears when a foot of the target touches the ground. The lower turning point appears when one foot passes the other foot.

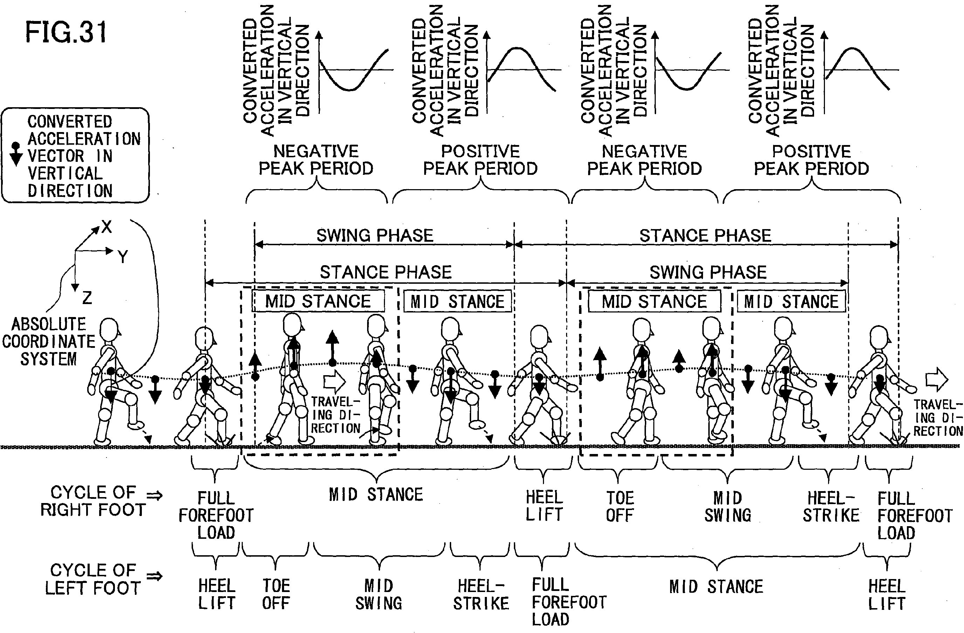

FIG. 31 is a drawing illustrating motion characteristics for walking in the vertical direction. In general, a walking motion may be categorized by a stance phase and a swing phase according to an inferior limb motion. In the stance phase, a heel of one foot touches the ground and then the toe of the foot rises off the ground. In the swing phase, a toe of one foot rises off the ground and then the heel of the foot touches the ground. In addition, the walking motion is characterized by a double supporting period. In general, when the walking motion becomes slow, the rate of the double supporting period increases, and when the walking motion becomes fast, the rate decreases. In addition, a running motion eliminates the double supporting period. Furthermore, when the user walks straight, it is known that the movement in the vertical direction and horizontal direction is the greatest in a "mid stance" phase.

A first half of the mid stance phase includes a motion in which a lifting foot passes the pivoting foot (a lifting foot passes a point under the trunk at the body). The body moves toward the upper direction, and the converted acceleration occurs at the vertical upper direction. On the other hand, the last half of the mid stance phase includes a motion in which the lifting foot touches the ground. The body moves toward the lower direction, and the converted acceleration occurs at the vertical lower direction.

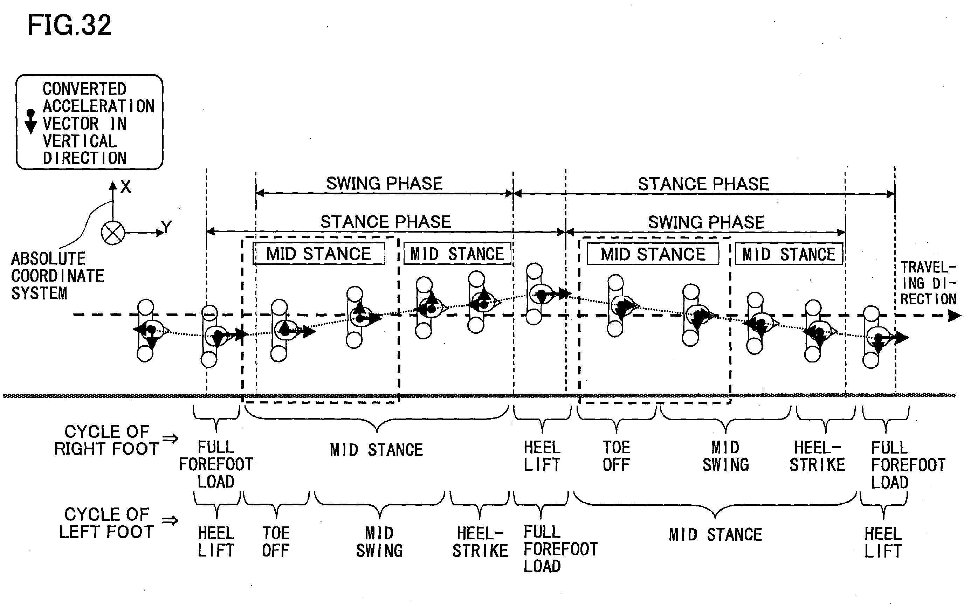

FIG. 32 is a drawing illustrating motion characteristics for walking in the horizontal direction. The horizontal component of the converted acceleration in the first half of the mid stance phase is affected by acceleration when a foot is lifted for a movement to a target position; and acceleration due to swaying caused by a movement of the center of gravity. On the other hand, the horizontal component of the converted acceleration in the last half of the mid stance phase is affected by acceleration when a foot is lifted for a movement to a target position; and acceleration due to swaying caused by a movement of the center of gravity. Thus, in the last half of the mid stance phase, the converted acceleration required to lift the foot is not observed.

Accordingly, the inertial device 1 according to an embodiment of this invention may estimate a traveling direction using the converted acceleration in the first half of the mid stance phase which reflects acceleration for lifting a foot to move the body of the target.

Thus, the inertial device 1 may detect, using signal thresholds, a lower turning point in the vertical component of converted acceleration 203 and measure a walking step. Since the converted acceleration in the horizontal direction at the upper turning point (i.e. a foot contacts the ground) is likely to include fluctuation and noise due to the contact, the lower turning point is used to detect the walking step. The converted acceleration in the horizontal direction at the lower turning point is less affected by the contact of the foot and may more precisely represent actual acceleration due to a walking motion.

The peak detection unit 204 may detect the peaks (the turning points) by detecting a moment at which the vertical component of converted acceleration 203 exceeds a predetermined threshold Th after the vertical component of converted acceleration 203 falls below Th. Here, the peak detection unit 204 may specify the peak position by calculating a middle time between the time $t_a$ when the vertical component of converted acceleration 203 falls below Th and the time $t_b$ when the vertical component of converted acceleration 203 exceeds Th. For example, Th may be a half value of the vertical component of converted acceleration observed in an actual walking motion. Any other method may be used to detect the peak position.

In addition, by storing the past peak position, the peak detection unit 204 may calculate a peak interval indicating a time interval between the past peak position and the present peak position.

The peak position storage unit 205 may store the peak position detected by the peak detection unit 204. The peak position storage unit 205 stores the past peak and the latest peak positions using a ring buffer. The peak position storage unit 205 stores at least the latest peak position and the previous peak position. The peak positions are updated by peak positions obtained later. The number of peak positions stored in the peak position storage unit 205 may be modified according to a storage capacity of the inertial device 1.

The converted acceleration storage unit 206 may add time data to the converted acceleration 202 output by the band-pass filter 201 and store them as time sequence data.

The horizontal component of the converted velocity management unit 207 may integrate, when the peak detection unit 204 detects the peak position, the horizontal component of the converted acceleration for each component (x and y) in a predetermined period (τ) centering on the peak position and calculate velocity in the horizontal direction. The velocity is called a "horizontal component of the converted velocity". The horizontal component of the converted velocity is represented as a vector indicating a relative value of a direction and amplitude of the velocity. The horizontal component of the converted velocity management unit 207 may store a set of the horizontal component of the converted velocity and time t. Thus, the horizontal component of the converted velocity management unit 207 has a function to calculate the horizontal component of the converted velocity; and a function to store the horizontal component of the converted velocity.

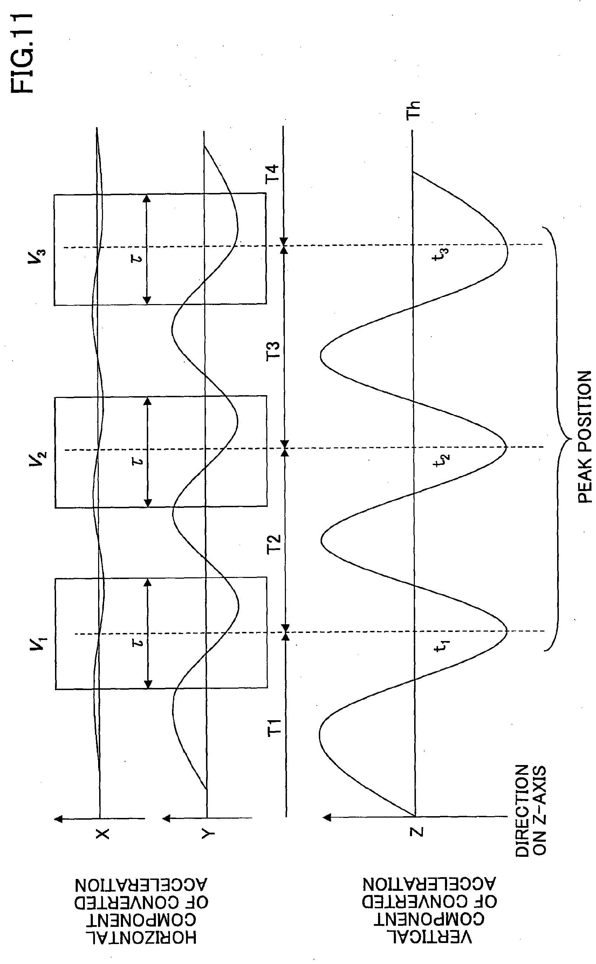

FIG. 11 shows waveforms indicating variation of the vertical component of converted acceleration 203 and the horizontal component of the converted acceleration, which correspond to the waveforms shown in FIG. 10. In this example, the horizontal component of the converted velocity management unit 207 may integrate the horizontal components of the converted acceleration with respects to time in predetermined periods (τ) centering on the peak positions $t_1$, $t_2$, and $t_3$ detected from the waveform of the vertical component of converted acceleration 203 and may calculate the horizontal component of the converted velocity $V_1$, $V_2$, $V_3$.

It is desirable that the period (τ) is less than or equal to ($t_b$ - $t_a$). This is because, if the horizontal component of the converted velocity management unit 207 performs the integration in the entire time domain, its result is likely to be affected by acceleration occurred by swaying due to a walking motion and acceleration occurred by fluctuation when a heel contacts the ground, and the horizontal component of the converted velocity management unit 207 fails to estimate the traveling direction correctly.

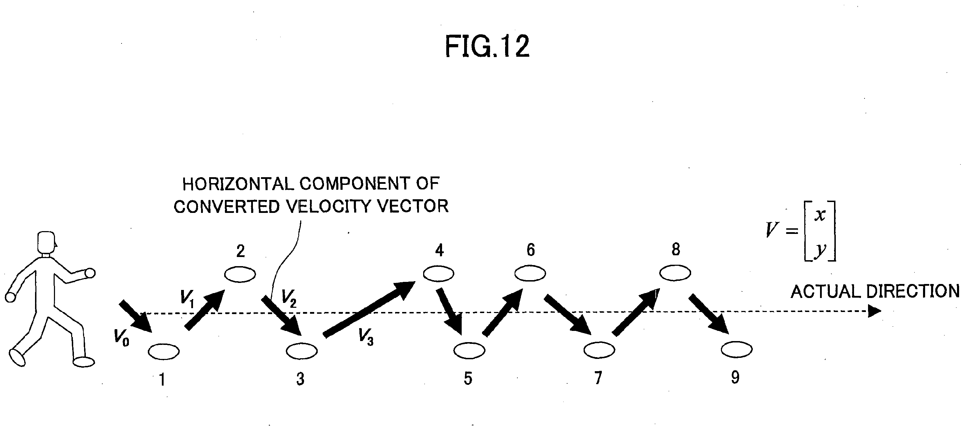

The horizontal component of the converted velocity may be generated by the above-mentioned peak detection procedure and the subsequent procedure when one foot passes the pivoting foot. The generated features may be represented as the horizontal component of the converted velocity vector indicating a direction and amplitude of the velocity. As shown in FIG. 12, the horizontal component of the converted velocity vector indicates the direction (traveling direction) and the amplitude of the movement of the target's body from side to side when one foot passes the pivoting foot.

The vertical component of peak converted acceleration management unit 208 may obtain converted acceleration at the peak position (time) in the vertical component of converted acceleration 203 (hereinafter called a "vertical component of the peak converted acceleration"), and may convey the converted acceleration to the determination unit 211 (explained later).

The horizontal component of the converted velocity acquisition unit 209 may obtain the latest and the previous horizontal components of the converted velocity from the horizontal component of the converted velocity management unit 207, and may convey the obtained horizontal component of the converted velocity to the determination unit 211.

The cycle acquisition unit 210 may obtain a plurality of the peak positions from the peak position storage unit 205 and obtain a traveling cycle (e.g. a walking cycle) of the target. In addition, the cycle acquisition unit 210 may obtain the latest and the past traveling cycle by calculating differences of the peak positions. The cycle acquisition unit 210 may pass the obtained traveling cycles to the determination unit 211 (explained later).

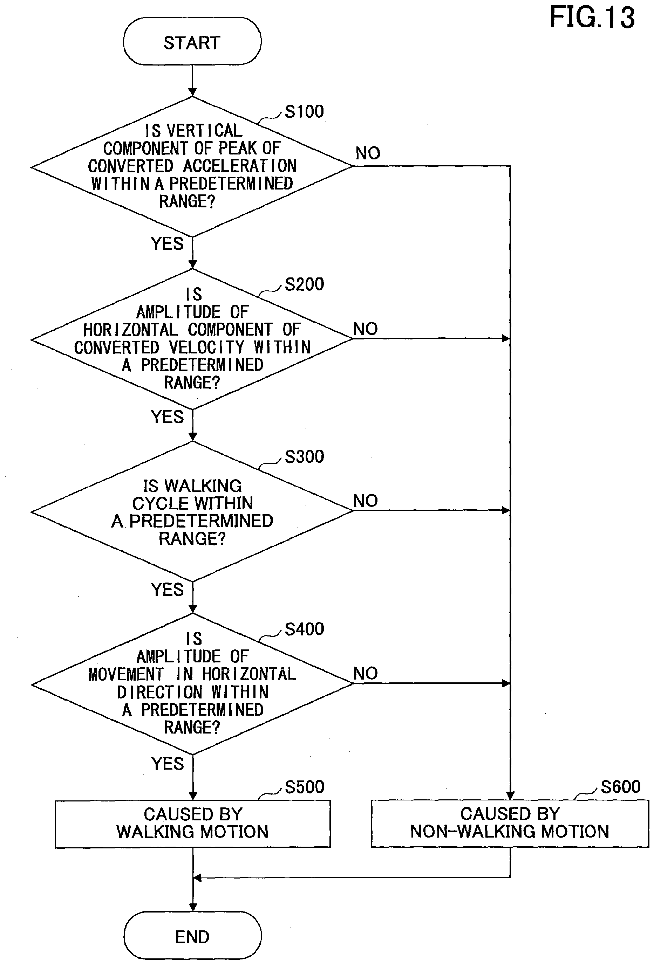

The determination unit 211 may determine that various kinds of data obtained in the above-mentioned procedure derive from an actual walking motion by executing procedures shown in FIG. 13. The walking motion includes a traveling motion performed by the target, which includes the walking motion as well as a running motion. On the other hand, a non-walking motion includes a motion to voluntary or involuntary shake the inertial device 1 or a motion caused by acceleration induced from an external environment (e.g. the target is transported by a traveling object). In the following, the procedure shown in FIG. 13 is explained.

At step S100, the determination unit 211 determines whether the vertical component of the peak converted acceleration obtained from the vertical component of peak converted acceleration management unit 208 falls within a predetermined range. If so, the procedure goes to step S200. Otherwise, the procedure goes to step S600 and the determination unit 211 determines that the detected motion (i.e. data) derives from a non-walking motion. The predetermined range about the vertical component of the peak converted acceleration may be pre-configured by a supplier or a user of the inertial device 1 according to the characteristics of the measurement target (e.g. the walking characteristics of the pedestrian).

Next, in step S200, the determination unit 211 determines whether the amplitude of the horizontal component of the converted velocity obtained from the horizontal component of the converted velocity management unit 207 falls within a predetermined range. If so, the procedure goes to step S300. Otherwise, the procedure goes to step S600 and the determination unit 211 determines that the detected motion derives from the non-walking motion. The predetermined range of the horizontal component of the converted velocity may be pre-configured by a supplier or a user of the inertial device 1 according to the characteristics of the measurement target (e.g. the walking characteristics of the pedestrian).

Next, in step S300, the' determination unit 211 determines whether the traveling cycle obtained from the cycle acquisition unit 210 falls within a predetermined range. If so, the procedure goes to step S400. Otherwise, the procedure goes to step S600 and the determination unit 211 determines that the detected motion derives from a non-walking motion. The predetermined range of the traveling cycle may be pre-configured by a supplier or a user of the inertial device 1 according to the characteristics of the measurement target (e.g. the walking characteristics of the pedestrian).

Next, in step S400, the determination unit 211 determines whether the amplitude of the movement in the horizontal direction falls within a predetermined range. If so, the procedure goes to step S500. Otherwise, the procedure goes to step S600 and the determination unit 211 determines that the detected motion derives from a non-walking motion.

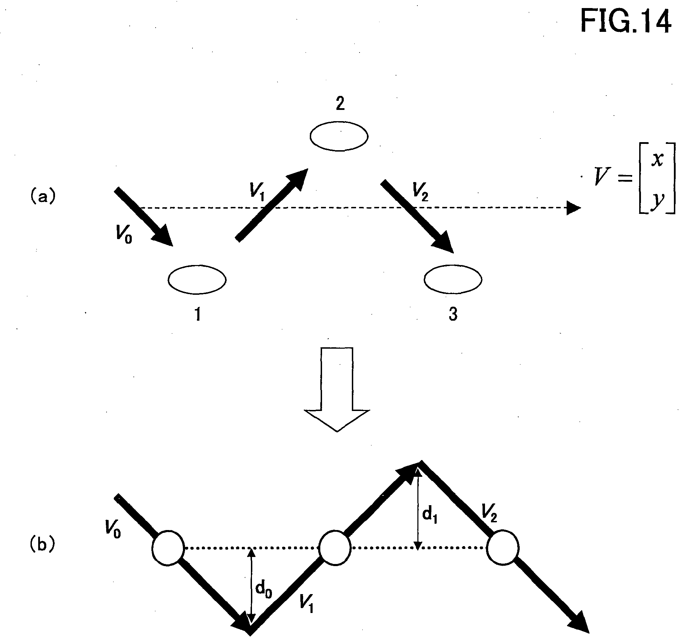

Here, with reference to FIG. 14, the variation of the velocity in the horizontal direction is explained. As shown in FIG. 14 (a), in a walking motion, when the user steps forward with the right foot, the converted velocity vector occurs in the right direction, and when the user steps forward with the left foot, the converted velocity vector occurs in the left direction. In order to recognize that motion, the determination unit 211 determines that the horizontal component of the converted velocity vector meets those characteristics.

First, the determination unit 211 combines a start point of the horizontal component of the converted velocity vector and an end point of the horizontal component of the converted velocity vector as shown in FIG. 14 (b). Next, the determination unit 211 calculates a distance $d_n$ between a line connecting centers of $V_n$ vectors and the end point of each $V_n$ vector. Next, the determination unit 211 determines whether $d_n$ falls within a predetermined range, and if so, the determination unit 211 determines that the motion derives from an actual walking motion. The predetermined range about $d_n$ may be pre-configured by a supplier or a user of the inertial device 1 according to the characteristics of the measurement target (e.g. the walking characteristics of the pedestrian).

At step S500, the determination unit 211 determines that the motion derives from an actual walking motion.

At step S600, the determination unit 211 determines that the detected motion derives from a non-walking motion.

Note that one or more steps of the above-mentioned steps S100 to S400 may be omitted. However, when all of the steps are executed, the inertial device 1 may estimate a traveling direction precisely.

When the determination unit 211 determines that the detected motion derives from a walking motion, the direction calculation unit 212 may perform the following procedure to estimate a traveling direction for each step.

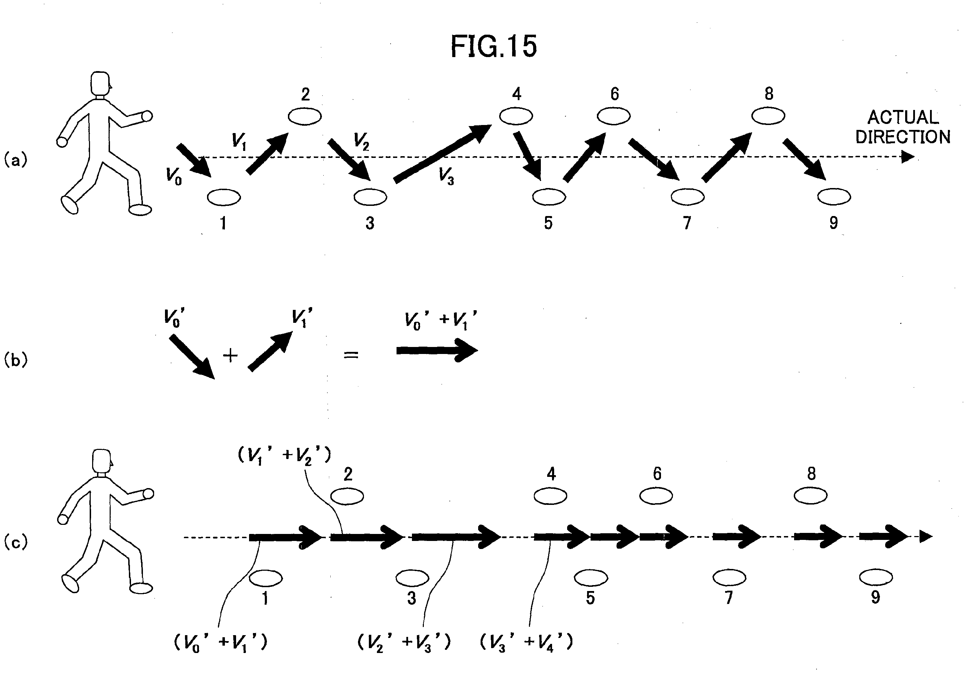

When a walking motion of a user transitions from zero steps to the first step, the direction calculation unit 212 obtains the horizontal component of the converted velocity vector $V_0$ from the horizontal component of the converted velocity acquisition unit 209 (See FIG. 15 (a)). Next, when a walking motion of a user transitions from the first step to the second step, the direction calculation unit 212 obtains the horizontal component of the converted velocity vector $V_1$ from the horizontal component of the converted velocity acquisition unit 209 (See FIG. 15 (a)).

Next, the direction calculation unit 212 normalizes the vectors $V_0$, $V_1$ to obtain vectors $V_0'$, $V_1'$. The direction calculation unit 212 calculate a resultant vector of the obtained vectors $V_0'$, $V_1'$, and estimates a traveling direction 213 for each step using a direction of the resultant vector. The above procedure is executed when the user moves forward a step.

As discussed above, the inertial device 1 may estimate a traveling direction per step by using a velocity vector in the horizontal direction in a time period centering on the (lower) peak position of the acceleration in the vertical direction in the absolute coordinate system. That may decrease an effect of vibration occurring when a foot of a pedestrian touches the ground while improving accuracy of the location estimation.

In addition, the inertial device 1 may evaluate accuracy of sensor data acquired from the magnetic field sensor. When the sensor data is reliable, the inertial device 1 may use the sensor data to correct a vector which represents the posture of the inertial device 1 (for a yaw angle component). As a result, the inertial device 1 may correct the vector representing the posture with a high degree of accuracy using the data from the magnetic field sensor.

4. Current Position Estimate Function

In the above discussion, it is explained that the inertial device 1 executes a function for estimating a traveling direction of a target based on outputs from inertial sensors. In the following, it will be explained that the inertial device 1 executes a function for estimating the current position of the target using the traveling direction and an absolute position acquired from an external means.

FIG. 17 is a block diagram of a functional configuration for the inertial device 1 according to an embodiment of this invention. The inertial device 1 according to this embodiment has a velocity estimate unit 300, an absolute positional data input unit 400, an absolute position estimate unit 500, and a map-matching unit 600 in addition to the coordinate system conversion unit 100 and the direction estimate unit 200 as discussed with FIG. 3. As shown in FIG. 17, input data for each functional unit and output data from each functional unit is illustrated schematically. In the following section, functions provided by the velocity estimate unit 300, the absolute positional data input unit 400, the absolute position estimate unit 500, and the map-matching unit 600 are discussed. As described hereinbelow, the velocity estimate unit 300 may calculate a velocity estimate vector which represents an actual velocity of the target based on a horizontal component of the converted velocity 214, a vertical component of peak acceleration 215, a cycle 216, an amplitude of body motion from side to side 217 (herein after called "amplitude 217"), and a traveling direction 213 (hereinafter called "direction 213") which are calculated by the direction estimate unit 200.

4.1 Velocity Estimation

FIG. 18 illustrates a detailed functional block diagram for the velocity estimate unit 300. The velocity estimate unit 300 has a horizontal component of the converted velocity acquisition unit 301, a vertical component of peak acceleration management unit 302, a cycle acquisition unit 303, an amplitude acquisition unit 304, a direction acquisition unit 305, a conversion unit 306, a velocity waveform generation unit 312, a velocity waveform combination unit 314, and a velocity waveform storage unit 315. The velocity estimate unit 300 may calculate the velocity estimate vector which represents the actual velocity of the target based on the horizontal component of the converted velocity 214, the vertical component of peak acceleration 215, the cycle 216, the amplitude 217, and the direction 213. In the following, processing executed by the velocity estimate unit 300 is discussed.

The horizontal component of the converted velocity acquisition unit 301 may acquire the horizontal component of the converted velocity 214 from the horizontal component of the converted velocity management unit 207 similarly to the horizontal component of the converted velocity acquisition unit 209 of the direction estimate unit 200, and the horizontal component of the converted velocity acquisition unit 301 may input the horizontal component of the converted velocity 214 to the conversion unit 306.

The vertical component of peak acceleration management unit 302 may acquire the vertical component of peak acceleration 215 from the converted acceleration storage unit 206 similarly to the vertical component of peak moving acceleration management unit 208 of the direction estimate unit 200, and the vertical component of peak acceleration management unit 302 may input the vertical component of peak acceleration 215 to the conversion unit 306.

The cycle acquisition unit 303 may acquire the cycle 216 of motion for the target using data stored in the peak position storage unit 205 similarly to the cycle acquisition unit 210 of the peak position storage unit 205, and the cycle acquisition unit 303 may input the acquired data to the conversion unit 306.

The amplitude acquisition unit 304 may acquire the amplitude 217, which represents the degree of movement of the target from side to side, from the horizontal component of the converted velocity 214, and the amplitude acquisition unit 304 may input the amplitude 217 to the conversion unit 306. The amplitude 217 may be calculated as illustrated above using FIG. 14.

The direction acquisition unit 305 may acquire the direction 213 from the direction calculation unit 212 of the direction estimate unit 200 and input the direction 213 to the conversion unit 306.

The conversion unit 306 converts the horizontal component of the converted velocity 214, the vertical component of peak acceleration 215, the cycle 216, the amplitude 217, and the direction 213 into a velocity parameter Pa 307, an intensity parameter Pb 308, a cycle parameter Pc 309, an amplitude parameter Pd 310, and a direction parameter Pe 311, respectively. The conversion unit 306 may normalize the data 214 - 217 according to a predetermined rule. The conversion unit 306 may convert each data into the parameter normalized in a certain range using any known normalization method.

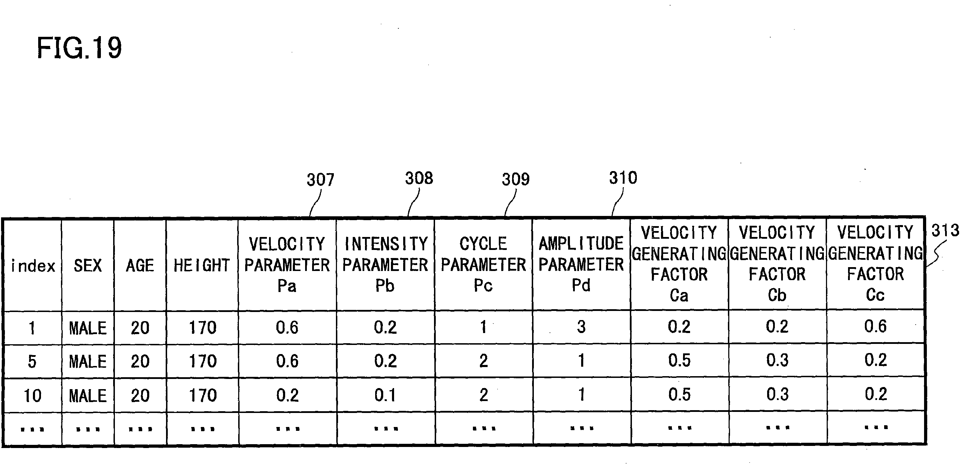

The velocity waveform generation unit 312 refers to a parameter DB 313 as shown in FIG. 19 and specify velocity generating factors Ca - Cc using one or more of the input parameters 307 - 311 (the input parameters 307 - 310 are used in the example shown in FIG. 19) and given attributes of the target (such as "sex", "age", and "height" of the target) as a key. Next, the velocity waveform generation unit 312 may generate a velocity waveform using one or more of the input parameters 307 - 311 and the velocity generating factors Ca - Cc according to an equation described below.

Here, the attributes may include "sex", "age", and "height" of the target. The attributes include, but are not limited to, any other information about the target such as a type of the target (e.g. a human, an animal, and a biped robot), an identification number, a serial number, and motion speed (e.g. high speed or low speed).

As shown in FIG. 19, the parameter DB 313 associates the attributes of the target "sex", "age", and "height" with the parameters 307 - 310 and the velocity generating factors Ca - Cc. In the example shown in FIG. 19, the direction parameter 311 is not used to specify the velocity generating factors Ca - Cc (i.e. the velocity generating factors are specified regardless of the direction). However, the parameter DB 313 may include the direction parameter 311 to specify the velocity generating factors Ca - Cc.

The parameter DB 313 is created in advance based on data acquired by an experiment in which a group of targets having common attributes performs motion determined by the parameters 307 - 311. Here, the parameter DB 313 maintains a norm value of the velocity parameter Pa.

When an entry having the input parameters 307 - 311 does not exist in the parameter DB 313, the velocity waveform generation unit 312 may choose the velocity generating factors Ca - Cc associated with other parameters 307 - 311 which are close to the input parameters. For example, for the purpose of choosing such factors (i.e. an entry including other parameters 307 - 311 which are close to the input parameters), the velocity waveform generation unit 312 may choose one of entries in which a sum of root-mean-square (RMS) of the parameters is the smallest. Any other known method may be used to choose the corresponding entry in the parameter DB 313. The velocity waveform generation unit 312 may transmit the specified velocity generating factors Ca - Cc to the velocity waveform combination unit 314.

The velocity waveform generation unit 312 generates a velocity waveform representing variation of velocity of the target in a time period 0 <= t <= Pc using the velocity generating factors Ca - Cc and the input parameters Pa - Pe 307 - 311 in the following equation.

$$Ve_x = (P_aC_a + P_bC_b + P_dC_c)\sin(\frac{\pi}{P_C}t)\cos\theta$$

$$Ve_y = (P_aC_a + P_bC_b + P_dC_c)\sin(\frac{\pi}{P_C}t)\sin\theta$$

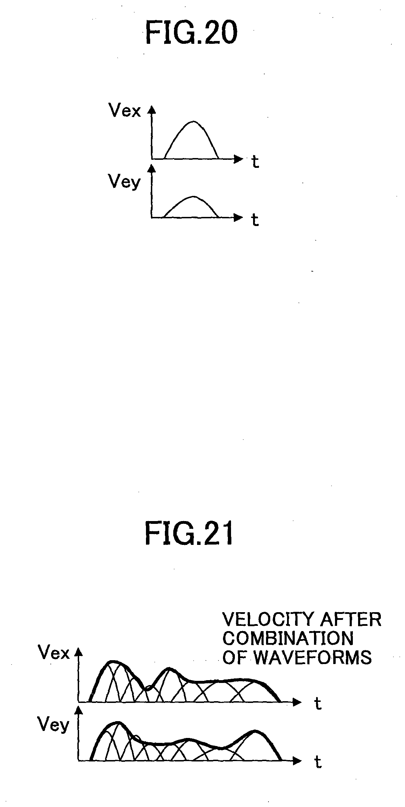

FIG. 20 shows an example of the generated velocity waveform. Here, θ corresponds to the direction parameter Pe 311. The equation includes three members: the first member to estimate velocity based on the velocity parameter Pa 307, the second member to estimate velocity based on the intensity parameter Pb 308, and the third member to estimate velocity based on the amplitude parameter Pd 310. The parameters Pa , Pb, and Pd in the members are multiplied by the velocity generating factors Ca - Cc, respectively. As a result, the velocity waveform representing walking motion is generated with high accuracy due to the velocity estimation based on a plurality of the parameters. Here, the velocity generating factors Ca - Cc stored in the parameter DB plurality of the parameters. Here, the velocity generating factors Ca - Cc stored in the parameter DB 313 are normalized so that the sum of them equals to 1. The velocity waveform generation unit 312 may transmit the generated velocity waveform to the velocity waveform combination unit 314.

After receiving the velocity waveform from the velocity waveform generation unit 312, the velocity waveform combination unit 314 reads the past velocity waveforms which have been previously generated and stored in the velocity waveform storage unit 315, and the velocity waveform combination unit 314 combines them. The velocity waveform combination unit 314 may combine the velocity waveforms by multiplying the velocity waveforms on a time axis. The velocity waveform combination unit 314 may combine the velocity waveforms in any known method. For example, the velocity waveform combination unit 314 may plot the maximum value of two or more of the velocity waveforms at a given time in order to create a single combined waveform. FIG. 21 shows an example of the velocity waveform combined by the velocity waveform combination unit 314. The velocity waveform combination unit 314 may store the combined waveform in the velocity waveform storage' unit 315.

The velocity waveform storage unit 315 may store the velocity waveform combined by the velocity waveform combination unit 314 as well as time information.

In this way, the velocity waveform storage unit 315 may store the latest velocity waveform combined according to the parameters which are obtained as needed. The absolute position estimate unit 500 and the map-matching unit 600, which are discussed later, may obtain velocity data representing the latest velocity by referring to values of the combined velocity waveform at the present time. The velocity data may be represented by two components in the horizontal direction. Thus, the velocity data is called "velocity estimate vector 316".

### 4.2 Absolute Positional Data Input

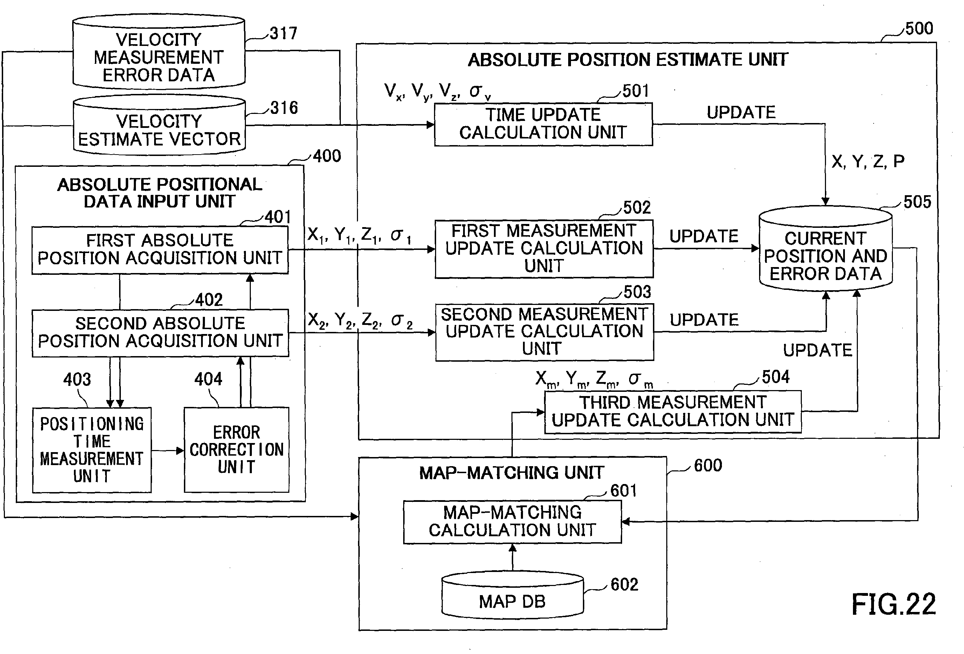

FIG. 22 illustrates a detailed functional block diagram for the absolute positional data input unit 400, the absolute position estimate unit 500, and the map-matching unit 600.

The absolute positional data input unit 400 includes a first absolute position acquisition unit 401, a second absolute position acquisition unit 402, a positioning time measurement unit 403, and an error correction unit 404. The absolute positional data input unit 400 may input absolute positional data representing an absolute position of the inertial device 1 and error data representing the degree of the error of the positional data to the absolute position estimate unit 500.

The first absolute position acquisition unit 401 may communicate with an external device such as a positional data transmitter via Bluetooth (TM) communications to obtain the absolute positional data representing the absolute position of the inertial device 1. The absolute positional data may include a set of positional vectors X1, Y1, and Z1 which represents the degree of latitude, longitude, and altitude. Alternatively, the absolute positional data may include any vector representing a relative position from the predetermined base point. The first absolute position acquisition unit 401 may acquire the error data $\sigma 1$ representing the degree of error of the absolute positional data from the positional data transmitter. The error data $\sigma 1$ is an error covariance matrix about the absolute positional data acquired from the positional data transmitter. For example, the error data $\sigma 1$ includes error values which are determined according to the radio field strength on the communication between the positional data transmitter and the inertial device 1. For example, when the radio field strength is weaker, the error covariance matrix indicates that the absolute positional data is less accurate. The error data may be stored in the inertial device 1 in advance or transmitted by the positional data transmitter. The first absolute position acquisition unit 401 may transmit the absolute positional data (e.g. the positional vectors) and the error data to a first measurement update calculation unit 502 of the absolute position estimate unit 500 which is discussed later.

The second absolute position acquisition unit 402 may acquire absolute positional data X2, Y2, and Z2, and error data o2via a different means from the first absolute position acquisition unit 401 such as GPS or Indoor Messaging System (IMES). In another embodiment, the second absolute position acquisition unit 402 may be omitted (i.e. only the first absolute position acquisition unit 401 exists). The number of the absolute position acquisition unit may be determined based on a system to which the inertial device 1 is applied. The second absolute position acquisition unit 402 may transmit the absolute positional data (the positional vectors) and the error data to a second measurement update calculation unit 503 of the absolute position estimate unit 500.

The positioning time measurement unit 403 may measure time intervals in which the first absolute position acquisition unit 401 and the second absolute position acquisition unit 402 acquire the absolute positional data and transmit them to the error correction unit 404 discussed below.

The error correction unit 404 may determine whether the time intervals transmitted by the positioning time measurement unit 403 correspond to a predetermined interval. According to the width of the interval, the error correction unit 404 may modify the error covariance matrix ($\sigma 1$ or $\sigma 2$) output from each the respective position acquisition unit 401 or 402 so that the covariance value becomes higher. To achieve that, the error correction unit 404 may use a table which associates the interval (sec) with an amount of correction (a value to be multiplied by the covariance value). Alternatively, the error correction unit 404 may correct the error covariance matrix when the interval exceeds a threshold value.

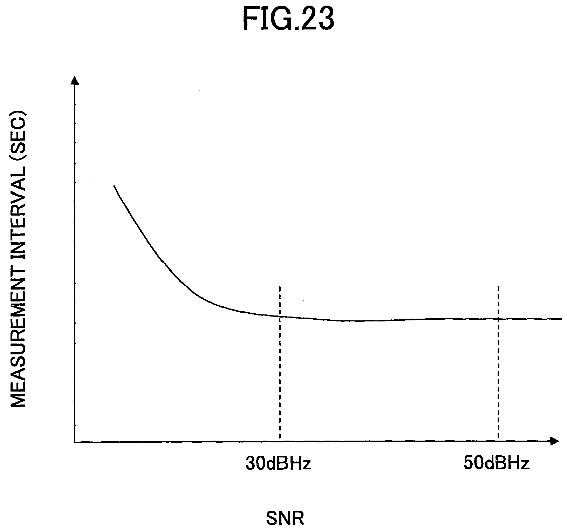

Since the error data derived from the GPS or the IMES is not generated on the ground of a multipath effect, the degree of accuracy for the error data depends on radio wave conditions. FIG. 23 shows a relationship between a signal-to-noise ratio (SNR) and the duration of a measurement interval. Thus, when the measurement interval exceeds the predetermined duration, the error correction unit 404 may correct the error covariance so that the covariance values become higher; and thereby the variation of the degree of the accuracy may be reduced.

The external device such as the positional data transmitter may transmit the absolute positional data and the error data via infrared communications, wireless LAN communications, or visible light communications, or positioning means with a camera, etc. The inertial device 1 may receive the absolute positional data and the error data by using a receiving unit configured to receive a signal via the above-mentioned communications. The received absolute positional data and the error data may be input to the measurement update calculation unit (502 or 503) of the absolute position estimate unit 500 (discussed later). Any number of the sets of the absolute position acquisition unit and the measurement update calculation unit may be employed depending on a system to which the inertial device 1 is applied.

### 4.3 Absolute Position Estimation

The absolute position estimate unit 500 includes a time update calculation unit 501, the first measurement update calculation unit 502, the second measurement update calculation unit 503, and a third measurement update calculation unit 504.

The absolute position estimate unit 500 may estimate the current position and error data (hereinafter called "current position and error data 505") using the velocity estimate vector 316 and the velocity measurement error data 317 provided with the velocity estimate vector 316. The velocity measurement error data 317 is an error covariance matrix σv representing an error of the velocity estimate vector 316. The velocity measurement error data 317 is determined and fixed by a system identification of the inertial device 1. Alternatively, a plurality of error covariance matrices may be used according to the velocity.

In addition, the absolute position estimate unit 500 may update the current position and error data 505 using the absolute positional data (the positional vectors) and error data (the error covariance matrix) output from the absolute positional data input unit 400. In addition, the absolute position estimate unit 500 may update the current position and error data 505 by using positional data (positional vectors) and error data (an error covariance matrix) output from the map-matching unit 600.

The absolute position estimate unit 500 may calculate or update the current position and error data 505 with the Extended Kalman Filter. In this embodiment, the absolute position estimate unit 500 may execute a time update procedure (time update calculation unit 501) and three measurement update procedures (the first, second, and third measurement update calculation units 502, 503, and 504) in parallel. Variables and models used in the procedures are explained below.

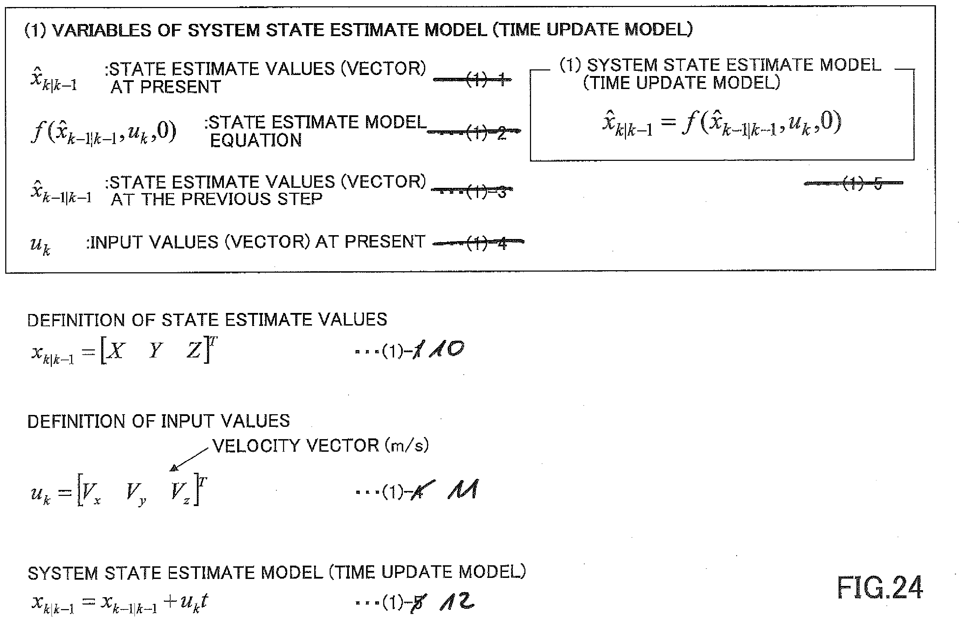

The time update calculation unit 501 may execute the time update procedure in the Extended Kalman Filter according to the definition of the variables and the models as shown in FIGs. 24 - 26 and calculate or update the current position and error data 505 of the inertial device 1. The variables and the model in the Extended Kalman Filter are defined as shown in FIG. 24. Thus, the state estimate values at present may be represented by a three dimension positional vector (i.e. the equation (1)-10 as shown in FIG. 24). In addition, the input values at present may be defined using the velocity estimate vector 316 (i.e. the equation (1)-11 as shown in FIG. 24) output from the velocity estimate unit 300. Furthermore, the system state estimate model may be defined as the equation (1)-12 as shown in FIG. 24.

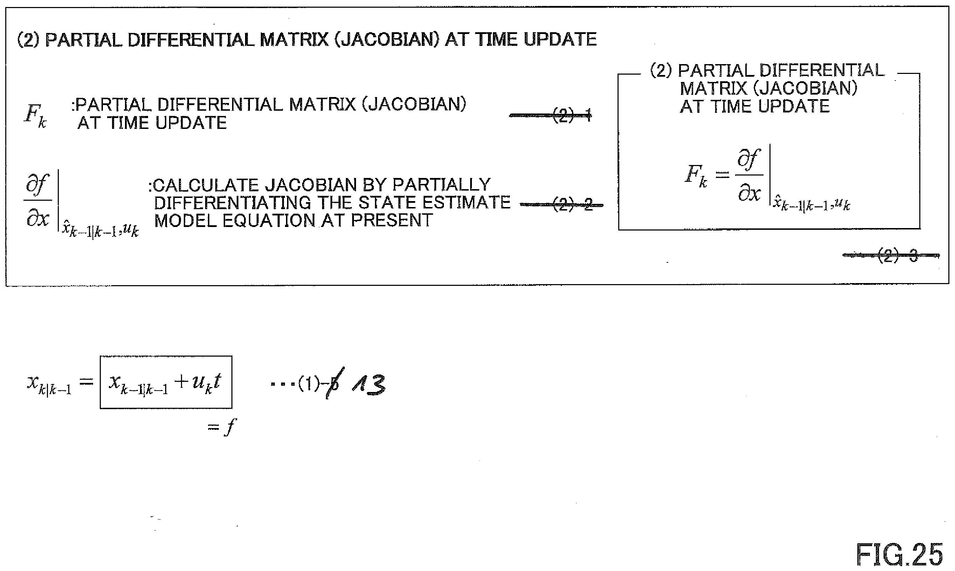

As shown in FIG. 25, the partial differential matrix (Jacobian) is the partial differentiation on the right side of the system state estimate model.

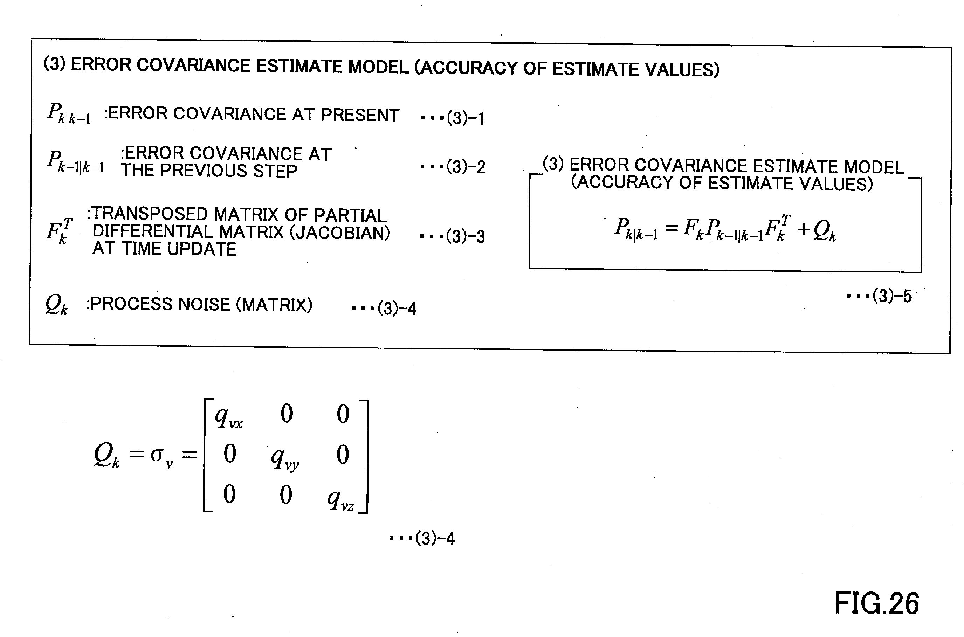

As shown in FIG. 26, the process noise Qk is the velocity measurement error data 317 which is predetermined and fixed (i.e. constant) by the system identification. An error covariance matrix at present $P_{k|k-1}$ and $P_{k-1|k-1}$ are 3x3 matrices in which all of the elements are real number.

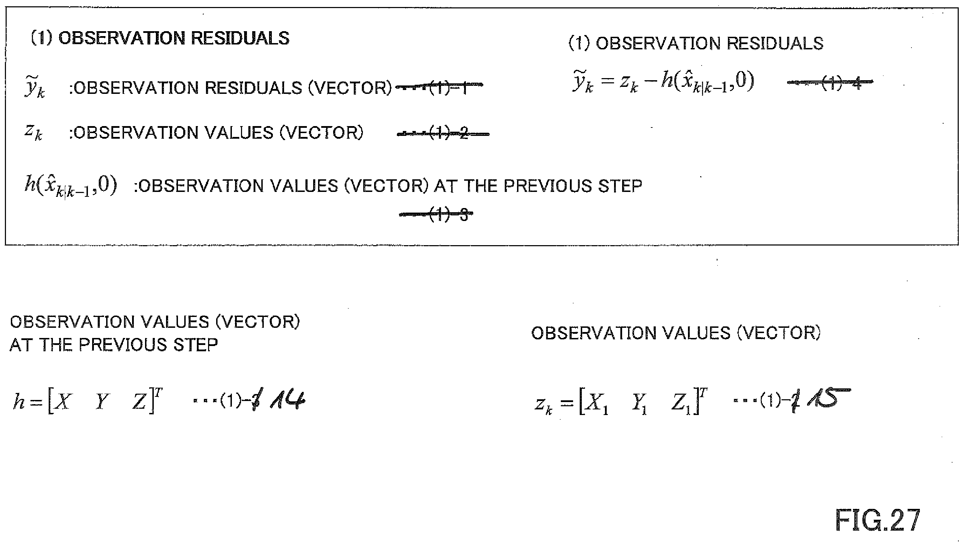

The first measurement update calculation unit 502 may execute the measurement update of the Extended Kalman Filter and calculate or update the current position and error data 505 of the inertial device 1. The variables and the model in the Extended Kalman Filter are defined as shown in FIG. 27. Thus, the observation values at the previous step may be represented by a three dimension positional vector (e. e. the equation (1) - 14 as shown in FIG. 27). In addition, the observation values are the positional vector (i.e. the absolute positional data) output from the first absolute position acquisition unit 401 (i.e. the equation (1)-15 as shown in FIG. 27).

$\tilde{y}_k$

Based on h and $z_k$, the following observation residuals may be calculated.

The partial differential matrix (Jacobian) $H_k$ at the measurement update in the general expression of the Extended Kalman Filter may be calculated by partially differentiating the observation values h expressed by the equation (1)-14 shown in FIG. 27.

The residual covariance $S_k$ in the general expression of the Extended Kalman Filter (See FIG. 28) may be calculated by using the following observation noise (matrix) $R_k$, which is the error data output from the first position acquisition unit 401, the partial differential matrix at measure update $H_k$, the transposed matrix $H_k^T$, and the residual covariance matrix at present $P_{k|k-1}$.

$$R_k = \sigma_1 = \begin{bmatrix} r_1 & 0 & 0 \\ 0 & r_2 & 0 \\ 0 & 0 & r_3 \end{bmatrix}$$

Here, $r_1$ indicates an x-axis component, $r_2$ indicates a y-axis component, and r3 indicates a z-axis component.

The Kalman gain $K_k$ in the general expression of the Extended Kalman Filter (See Fig. 28) may be calculated from the error covariance matrix at present $P_{k|k-1}$, the transposed matrix $H_k^T$, and the inverse matrix of the residual covariance $S_k^{-1}$.

The updated state estimate values and the updated error covariance matrix $P_{k|k}$ in the general expression of the Extended Kalman Filter (See Fig. 28) may be calculated using the variables which have been calculated in the above-mentioned procedure.

The second measurement update calculation unit 503 may execute the measurement update procedure of the Extended Kalman Filter and calculate or update the current position and error data 505 of the inertial device 1 as well as the first measurement update calculation unit 502. The variables in the Extended Kalman Filter are similar to ones used by the first measurement update calculation unit 502 except that the observation values $z_k$ and the observation noise $R_k$ are the absolute positional data and error data which have been output from the second absolute position acquisition unit 402.

The third measurement update calculation unit 504 may execute the measurement update procedure of the Extended Kalman Filter and calculate or update the current position and error data 505 of the inertial device 1 as well as the first measurement update calculation unit 502. The variables in the Extended Kalman Filter are similar to ones used by the first measurement update calculation unit 502 except that the observation values $z_k$ and the observation noise $R_k$ are the absolute positional data and error data which have been output from the map-matching unit 600 which is discussed later.

The absolute position estimate unit 500 may update the current position and error data 505 in the framework of the Extended Kalman Filter thereby estimating the current position with great accuracy. An application installed on the inertial device 1 may refer to the current position and error data 505 and acquire a direction of the inertial device (heading information and estimated yaw angle information) in addition to the estimated current position.

### 4.4 Map-matching

The map-matching unit 600 has a map-matching calculation unit 601. The map-matching unit 600 may acquire the latest current position and error data 505 and the velocity estimate vector 316 and execute a map-matching procedure.

The map-matching calculation unit 601 may acquire the latest current position and error data 505 and the velocity estimate vector 316; refer to a map database (DB) 602 which is prepared in advance; and acquire area data representing an area in which the target may walk or travel. Next, the map-matching calculation unit 601 may execute the map-matching procedure by using a known particle filter algorithm (See Non-patent document 6). When the current position is on an area in which the target may not walk or travel, the map-matching calculation unit 601 may correct the current position to be the area in which the target may walk or travel. In addition, the map-matching calculation unit 601 may calculate an error covariance matrix $\sigma_m$ representing an amount of error at each component of the positional vector for the corrected position. The map-matching calculation unit 601 may transmit the positional vector $(X_m, Y_m, Z_m)$ representing the corrected position and the error covariance matrix $\sigma_m$ to the third measurement update calculation unit 504.

As discussed above, the inertial device 1 according to this embodiment combines a plurality of the velocity waveforms generated from the parameters 307 - 311 representing motion characteristics of the target and calculates the velocity based on the combined waveform. The parameters are stored in the database after having been associated with the characteristics of the target. One of the velocity waveforms is generated so as to match the target and its motion. In addition, the equations representing the velocity waveform are represented by a plurality of members (models). Each of the members includes a weight indicating the degree of reliability for the member. Therefore, the velocity may be estimated with high resolution performance and a high degree of reliability.

In addition, the inertial device 1 according to this embodiment may calculate the current position with a high degree of accuracy by using the velocity and its error data, which are relative data, as well as the absolute positional data and its error data. Furthermore, the inertial device 1 may improve the accuracy of the calculation for the current position by correcting the current position using the map-matching procedure with the map database 602.

### 5. Estimate Result of Velocity and Current Position

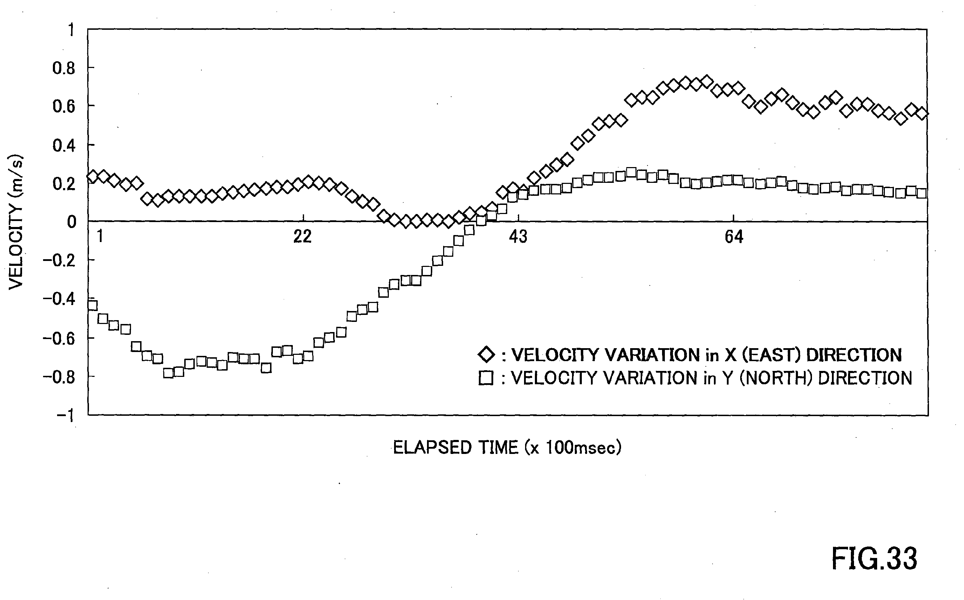

With reference to FIGs. 33 - 37, results of the estimation for the velocity and the current position using the inertial device 1 according to an embodiment of the present invention are explained.

The inertial device 1 according to this embodiment has an acceleration sensor, a gyro sensor, and a magnetic field sensor. In addition, the inertial device 1 has a GPS/IMES module and a Bluetooth (TM) module for obtaining absolute positional data as a positioning unit. The inertial device 1 is a mobile terminal in the form of a smartphone having the above-mentioned devices.

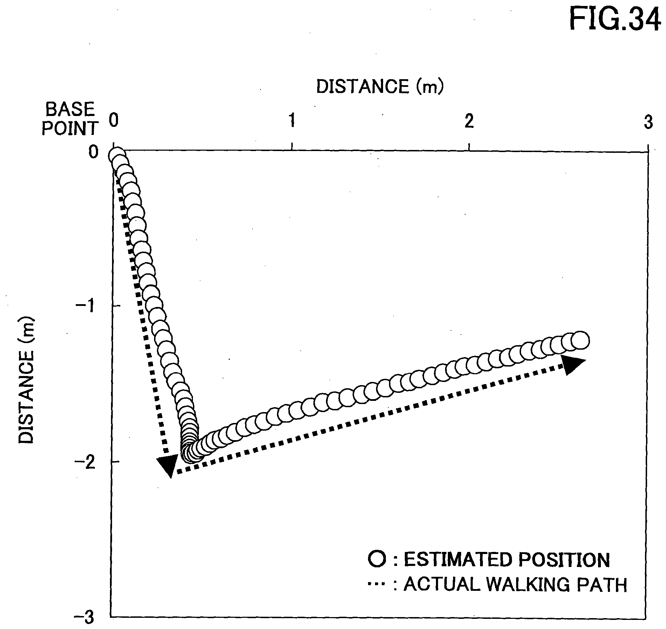

FIG. 33 shows a result of the estimated velocity when the inertial device 1 is mounted on the waist part of a walking user. As shown in FIG. 34, the user goes straight about 2 meters at first, and then turns 90 degrees to the left, and again goes straight. The horizontal axis in FIG. 33 represents elapsed time (100 milliseconds) and the vertical axis represents the velocity (meter per second). FIG. 33 shows a time window about 8 seconds while the user walks. Within the time window, the user holding the inertial device 1 walks 7 steps.

FIG. 33 shows waveforms in the horizontal direction (i.e. x and y directions) combined by the velocity waveform combination unit 314. The waveform is combined from waveforms generated by the velocity waveform generation unit 312 using parameters such as the direction obtained by the direction estimate unit 200, the cycle, the amplitude, etc. As shown in FIG. 33, the inertial device 1 may output the velocity for walking motion with high resolution performance (i.e. 100 ms).

FIG. 34 shows a result of the estimated current position when the inertial device 1 is mounted on the waist part of a walking user. As illustrated by arrows with dotted lines in FIG. 34, the user goes straight about 2 meters at first, and then turns 90 degrees to the left, and again goes straight. Circles shown in FIG. 34 indicate a history of the current positions which are estimated by the absolute position estimate unit 500 based on the current velocities obtained from the velocity waveform shown in FIG. 33. As shown in FIG. 34, the history of the current positions estimated by the inertial device 1 mostly correspond with the actual walking path.

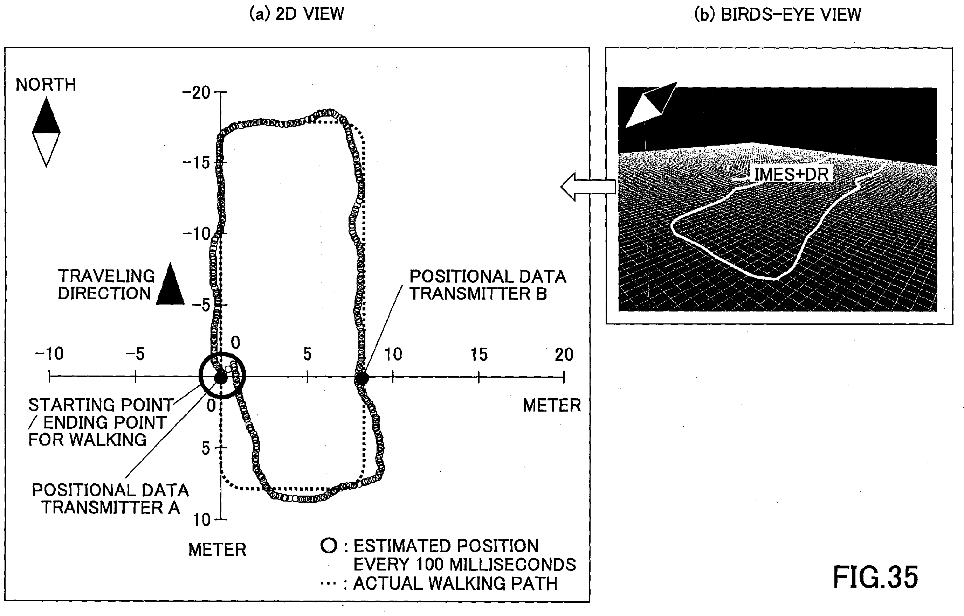

FIG. 35 shows a result of the estimated current position when a user holds the inertial device 1 in his hand. In this case, the user goes around about 75 meters in a clockwise fashion (92 steps total). On the walking path, two positional data transmitters A and B, which transmit the absolute positional data (latitude and longitude) and its error data via the IMES, are installed. Thus, the inertial device 1 may estimate the current position based on both the sensor data and the positional data transmitted from the positional data transmitter.

In the FIG. 35, a dotted line indicates the actual walking path of the user, and circles indicate a history of the current positions obtained by the inertial device 1. As shown in FIG. 35, the inertial device 1 may estimate the current position with high time resolution performance (i.e. 100 ms) and achieve high accuracy estimation for actual walking. In addition, the time resolution performance is configurable by changing the parameters.

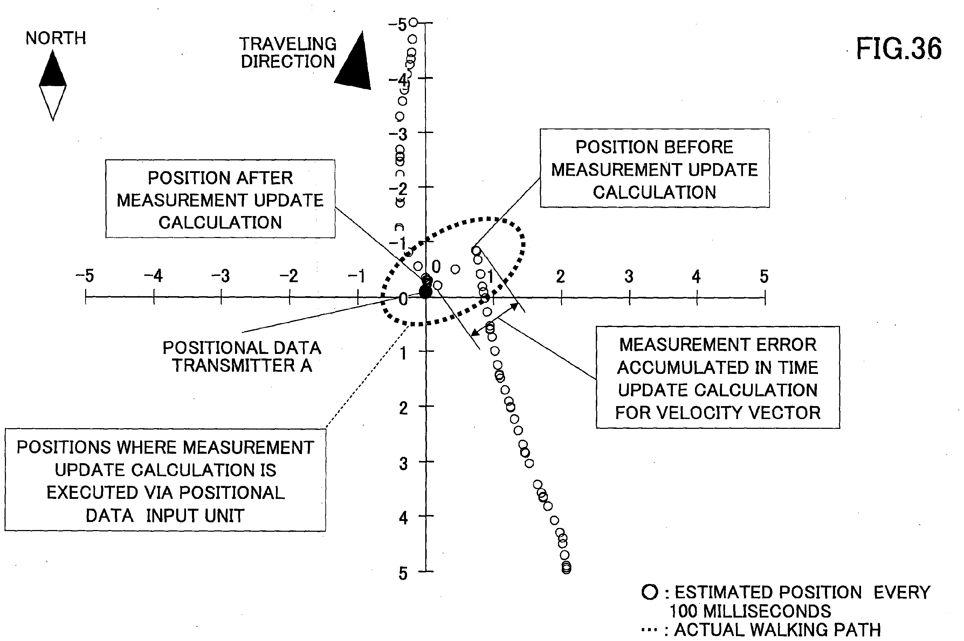

FIG. 36 is an enlarged view of the result shown in FIG. 35 around the starting (or ending) point for the walking. As shown in FIG. 36, a measurement error about 1 m is observed just before the ending point (i.e. a position before the inertial device 1 executes the measurement update procedure using the positional data from the positional data transmitter A). This occurs for the following reason.

(1) The estimated velocity at present obtained by the velocity waveform combination unit 314 includes an error.
(2) Such an error is accumulated in the time update procedure for the estimated velocity.

The result shows that the error of the estimation falls within an admissible range.

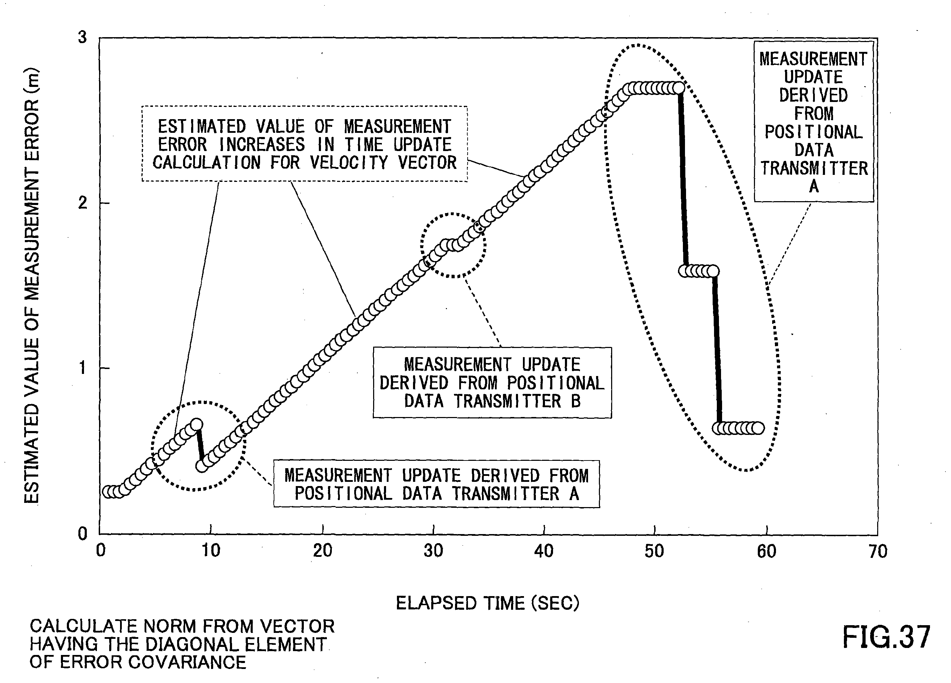

FIG. 37 shows variation of measurement errors estimated by the Kalman Filter in the walking motion as shown in FIG. 35. The inertial device 1 may estimate the error included in the velocity from the velocity waveform combination unit 314 and the error of the current position as the error covariance matrix in the framework of the Kalman Filter. As shown in FIG. 37, the estimated values of the measurement errors (square-root of sum of squares for a diagonal component of the error variance matrix) estimated by the Kalman Filter increase as the user walks.

On the other hand, when the inertial device 1 may receive the absolute positional data and the error data from the positional data transmitter, the inertial device 1 compares the measurement error about the positioning means of the positional data transmitter with the estimated value of the measurement error estimated by the Kalman Filter for the current position. Next, the inertial device 1 corrects the estimated value of the present position so that the covariance values in the error covariance matrix become smaller. As shown in FIG. 37, the estimated value of the measurement error estimated by the Kalman Filter decreases when the inertial device 1 executes the measurement update procedures using data from the positional data transmitters A and B. As a result, the inertial device 1 may correct the estimated current position and improve accuracy to estimate the position using the absolute positional data and the error data obtained from the external device.

Again with reference to FIG. 36, it is observed that the accumulated measurement errors are corrected and the current position is fixed to the correct - position (the ending point of walking) by executing the measurement update procedure based in the absolute positional data input just before the user finishes walking.

As discussed above, the inertial device 1 according to the embodiment improves the resolution performance and the degree of accuracy for estimation of user's current position. As a result, a convenient inertial device and inertial navigation technique are achieved which enable a user to hold the device in any form.

In the above-mentioned embodiment, the programs executed in each device explained in the embodiment may be in an installable format or in an executable format on a computer-readable recording medium such as a CD-ROM, a flexible disk (FD), a CD-R, or a digital versatile disk (DVD).

The programs executed on each device according to the embodiment may be stored on a computer connected to a network such as the Internet and may be provided by downloading via the network. The programs executed on each device according to the embodiment may be provided or distributed with the network such as the Internet.

Alternatively, the programs executed on each device according to the embodiment may be stored in the ROM in advance and provided.

The above-mentioned inertial device, method, and program are not limited to the above embodiments and various variations and modifications may be made without departing from the scope of the present invention as defined by the appended claims.

Citation List

Patent Literature

[Patent Document 1] Japanese Laid-open Patent Publication No. 2012-088253
[Patent Document 2] Japanese Patent No. 4714853
[Patent Document 3] Japanese Laid-open Patent Publication No. 2003-302419
[Patent Document 4] Japanese Laid-open Patent Publication No. 2011-237452
[Patent Document 5] Japanese Laid-open Patent Publication No. 2000-97722
[Patent Document 6] Japanese Laid-open Patent Publication No. 2002-139340

Non Patent Literature

[Non-Patent Document 1] Greg Welch and Gary Bishop, "An Introduction to the Kalman Filter", Department of Computer Science, University of North Carolina at Chapel Hill, 7/24/2006
[Non-Patent Document 2] Tohru Katayama, "Applied Kalman Filtering, New Edition", Asakura Bookshop, 1/20/2000
[Non-Patent Document 3] Wei Tech Ang et al., "Kalman filtering for real-time orientation tracking of handheld microsurgical instrument", Intelligent Robots and Systems, 2004 (IROS 2004). Proceedings. 2004 IEEE/RSJ International Conference, 9/28/2004, Volume 3, p.2574-2580 vol.3
[Non-Patent Document 4] Malcolm D. Shuster, "Deterministic Three-Axis Attitude Determination", The Journal of the Astronautical Sciences, July 2004, Volume 52, No. 3, p.405-419
[Non-Patent Document 5] "TRIAD Algorithm", [online] 5/25/2011, Wikipedia, Internet, <URL:http://en.wikipedia.org/wiki/User:Snietfeld/TRIA D_Algorithm>
[Non-Patent Document 6] I. M. Rekleitis, "A particle filter tutorial for mobile robot localization", Technical Report TR-CIM-04-02, Centre for Intelligent Machines, McGill University, 2004

**Claims**

1. An inertial device (1) carried by a walking user comprising:

an inertial sensor unit configured to generate an output representing motion of a walking user holding the inertial device, wherein the inertial sensor unit comprises an acceleration sensor (14) configured to detect three-axes acceleration in a device coordinate system used by the inertial device;
a coordinate system conversion unit (100) configured to convert the three-axes acceleration obtained from the acceleration sensor (14) in the device coordinate system into absolute acceleration in the world coordinate system;
a direction estimation unit (200) adapted to calculate, from the absolute acceleration a horizontal component of a converted velocity (214), a vertical component of peak acceleration (215), a walking cycle (216), an amplitude of body motion from side to side (217), and a traveling direction (213);
a velocity estimation unit (300) adapted to calculate a velocity estimate vector which represents an actual velocity of the walking user carrying the inertial device based on the horizontal component of the converted velocity (214), the vertical component of peak acceleration (215), the walking cycle (216), the amplitude of body motion from side to side (217), and the traveling direction (213), wherein the velocity estimation unit comprises:

a conversion unit (306) configured to convert the horizontal component of the converted velocity (214), the vertical component of peak acceleration (215), the walking cycle (216), the amplitude (217), and the direction (213) into a velocity parameter Pa (307), an intensity parameter Pb (308), a cycle parameter Pc (309), an amplitude parameter Pd (310), and a direction parameter Pe (311), respectively, wherein the velocity parameter Pa (307), the intensity parameter Pb (308), the cycle parameter Pc (309), the amplitude parameter Pd (310), and the direction parameter Pe (311) are input parameters;
a parameter database (313) configured to store velocity generating factors Ca-Cc associated with the input parameters and attributes of a walking user, wherein the parameter (313) is created in advance based on data acquired by an experiment in which a group of walking users having common attributes performs motion determined by the input parameters (307-311);

a velocity waveform generation unit (312) configured to refer to the parameter database (313) for specifying velocity generating factors Ca-Cc using the input parameters (307-311) and given attributes of the walking user, wherein the velocity waveform generation unit (312) is further configured to generate a velocity waveform using the velocity parameter Pa (307), the intensity parameter Pb (308), the cycle parameter Pc (309), the amplitude parameter Pd (310), and the direction parameter Pe (311) and the velocity generating factors Ca-Cc according to the following equations:

$$Ve_x = (P_aC_a + P_bC_b + P_dC_c)\sin(\frac{\pi}{P_c}t)\cos\theta$$

$$Ve_y = (P_aC_a + P_bC_b + P_dC_c)\sin(\frac{\pi}{P_c}t)\sin\theta$$

a velocity waveform storage unit (315) configured to store waveforms that have been previously generated; and

a velocity waveform combination unit (314) configured to receive the velocity waveform from the velocity waveform generation unit (312), read past velocity waveforms which have been previously generated and stored in the velocity waveform storage unit (315)a, and combine the past velocity waveforms with the received waveform; and

an estimation unit (500) configured to estimate a position wherein the inertial device is currently located using velocity data representing the latest velocity by referring to values of the combined velocity waveform at the present time.

2. The inertial device (1) as claimed in claim 1, wherein the estimation unit (500) estimates the position where the inertial device (1) is currently located using both the velocity data and given error data representing a degree of error in calculating the velocity data.

3. The inertial device (1) as claimed in claim 2, further comprising an input unit (400) configured to input absolute positional data, which is received from a positional data transmitter (A), and error data of the absolute positional data into the estimation unit (500); wherein the estimation unit (500) updates the estimated position using the absolute positional data and the error data of the absolute positional data.

4. The inertial device (1) as claimed in claim 3, further comprising:

a measurement unit (403) configured to measure an interval to receive the absolute positional data; and

a correction unit (404) configured to correct the error data of the absolute positional data according to the measured interval.

5. The inertial device (1) as claimed in claim 3 or 4, wherein the input unit (400) inputs other absolute positional data, which is received from other positional data transmitters employing communication methods different from each other, and error data of the other absolute positional data into the estimation unit.

6. The inertial device (1) as claimed in claim 5, wherein the input unit (400) inputs the other absolute positional data received from one of the other positional data transmitters via communications conforming to the Indoor Messaging System (IMES) standard.

7. The inertial device (1) as claimed in any one of claims 1 to 6, further comprising a map matching unit (600) configured to match the estimated position to a map defining permitted areas in which the target is permitted to enter and forbidden areas in which the target is not permitted to enter and to correct the position when the estimated position is in the forbidden areas, wherein the estimation unit (500) updates the estimated position according to the corrected position.

8. A method comprising:

generating an output representing motion of a walking user holding an inertial device using an inertial sensor unit, wherein the inertial sensor unit comprises an acceleration sensor (14) configured to detect three-axes acceleration in a device coordinate system used by the inertial device;

converting the three-axes acceleration obtained from the acceleration sensor (14) in the device coordinate system into absolute acceleration in the world coordinate system;

calculating, by a direction estimation unit (200) and from the absolute acceleration a horizontal component of a converted velocity (214), a vertical component of peak acceleration (215), a walking cycle (216), an amplitude of body motion from side to side (217), and a traveling direction (213) ;

calculating, by a velocity estimation unit (300) a velocity estimate vector which represents an actual velocity of the walking user carrying the inertial device based on the horizontal component of the converted velocity (214), the vertical component of peak acceleration (215), the walking cycle (216), the amplitude of body motion from side to side (217), and the traveling direction (213),l wherein calculating the velocity estimate comprises:

converting by a conversion unit (306) the horizontal component of the converted velocity (214), the vertical component of peak acceleration (215), the walking cycle (216), the amplitude (217), and the direction (213) into a velocity parameter Pa (307), an intensity parameter Pb (308), a cycle parameter Pc (309), an amplitude parameter Pd (310), and a direction parameter Pe (311), respectively, wherein the velocity parameter Pa (307), the intensity parameter Pb (308), the cycle parameter Pc (309), the amplitude parameter Pd (310), and the direction parameter Pe (311) are input parameters;

referring by a velocity waveform generation unit (312) to a parameter database (313) for specifying velocity generating factors Ca-Cc using the input parameters (307-311) and given attributes of the walking user, wherein the parameter database is created in advance based on data acquired by an experiment in which a group of targets having common attributes performs motion determined by the input parameters (307 - 311), generating by the velocity waveform generation unit (312) a velocity waveform using the velocity parameter Pa (307), the intensity parameter Pb (308), the cycle parameter Pc (309), the amplitude parameter Pd (310), and the direction parameter Pe (311) and the velocity generating factors Ca-Cc according to the following equations:

$$Ve_x = (P_a C_a + P_b C_b + P_d C_c) \sin(\frac{\pi}{P_c} t) \cos\theta$$

$$Ve_y = (P_a C_a + P_b C_b + P_d C_c) \sin(\frac{\pi}{P_c} t) \sin\theta$$

storing by a velocity waveform storage unit (315) waveforms that have been previously generated; and receiving by a velocity waveform combination unit (314) the velocity waveform from the velocity waveform generation unit (312),

reading past velocity waveforms which have been previously generated and stored in the velocity waveform storage unit (315)a, and

combining the past velocity waveforms with the received waveform; and

estimating a position wherein the inertial device is currently located using velocity data representing the latest velocity by referring to values of the combined velocity waveform at the present time.

9. A program for causing an inertial device (1) comprising an acceleration sensor (14) configured to detect three-axes acceleration in a device coordinate system used by the inertial device to perform the method according to claim 8.

**Patentansprüche**

1. Trägheitsvorrichtung (1), die von einem gehenden Benutzer getragen wird, mit:

einer Trägheitssensoreinheit, die konfiguriert ist, um eine Ausgabe zu erzeugen, die die Bewegung eines gehenden Benutzers darstellt, der die Trägheitsvorrichtung hält, wobei die Trägheitssensoreinheit einen Beschleunigungssensor (14) umfasst, der konfiguriert ist, um eine dreiachsige Beschleunigung in einem Vorrichtungskoordinatensystem zu erfassen, das von der Trägheitsvorrichtung verwendet wird;

einer Koordinatensystemumwandlungseinheit (100), die konfiguriert ist, um die vom Beschleunigungssensor (14) in dem Vorrichtungskoordinatensystem erhaltene dreiachsige Beschleunigung in eine absolute Beschleunigung im Weltkoordinatensystem umzuwandeln;

einer Richtungsschätzeinheit (200), die angepasst ist, um aus der absoluten Beschleunigung eine horizontale Komponente einer umgewandelten Geschwindigkeit (214), eine vertikale Komponente der Spitzenbeschleunigung (215), einen Gehzyklus (216), eine Amplitude der Körperbewegung von Seite zu Seite (217) und eine Fortbewegungsrichtung (213) zu berechnen;

einer Geschwindigkeitsschätzeinheit (300), die angepasst ist, um einen Geschwindigkeitsschätzungsvektor zu berechnen, der eine tatsächliche Geschwindigkeit des gehenden Benutzers darstellt, der die Trägheitsvorrichtung trägt, basierend auf der horizontalen Komponente der umgewandelten Geschwindigkeit (214), der vertikalen Komponente der Spitzenbeschleunigung (215); dem Gehzyklus (216), der Amplitude der Körperbewegung von Seite zu Seite (217) und der Fortbewegungsrichtung (213), wobei die Geschwindigkeitsschätzeinheit umfasst:

eine Umwandlungseinheit (306), die konfiguriert ist, um die horizontale Komponente der umgerechneten Geschwindigkeit (214), die vertikale Komponente der Spitzenbeschleunigung (215), den Gehzyklus (216), die Amplitude (217) und die Richtung (213) in einen Geschwindigkeitsparameter Pa (307), einen Intensitätsparameter Pb (308), einen Zyklusparameter Pc (309), einen Amplitudenparameter Pd (310) bzw. einen Richtungsparameter Pe (311) umzuwandeln, wobei der Geschwindigkeitsparameter Pa (307), der Intensitätsparameter Pb (308), der Zyklusparameter Pc (309), der Amplitudenparameter Pd (310) und der Richtungsparameter Pe (311) Eingabeparameter sind;

eine Parameterdatenbank (313), die konfiguriert ist, um Geschwindigkeitserzeugungsfaktoren Ca-Cc zu speichern, die den Eingabeparametern und Attributen eines gehenden Benutzers zugeordnet sind, wobei der Parameter (313) im Voraus auf der Grundlage von Daten erstellt wird, die durch ein Experiment erfasst wurden, bei dem eine Gruppe von gehenden Benutzern mit gemeinsamen Attributen eine Bewegung ausführt, die durch die Eingabeparameter (307-311) bestimmt wird.

eine Geschwindigkeitswellenform-Erzeugungseinheit (312), die konfiguriert ist, um auf die Parameterdatenbank (313) zum Spezifizieren von Geschwindigkeitserzeugungsfaktoren Ca-Cc unter Verwendung der Eingabeparameter (307-311) und vorgegebener Attribute des gehenden Benutzers Bezug zu nehmen, wobei die Geschwindigkeitswellenform-Erzeugungseinheit (312) ferner konfiguriert ist, um eine Geschwindigkeitswellenform zu erzeugen, unter Verwendung des Geschwindigkeitsparameters Pa (307), des Intensitätsparameters Pb (308), des Zyklusparameters Pc (309), des Amplitudenparameters Pd (310) und des Richtungsparameters Pe (311) und die geschwindigkeitserzeugenden Faktoren Ca-Cc, gemäß den folgenden Gleichungen:

$$Ve_x = (P_a C_a + P_b C_b + P_d C_e) sin(\frac{\pi}{P_c} t) cos\theta$$

$$Ve_y = (P_a C_a + P_b C_b + P_d C_e) sin(\frac{\pi}{P_c} t) sin\theta$$

eine Geschwindigkeitswellenform-Speichereinheit (315), die konfiguriert ist, um zuvor erzeugte Wellenformen zu speichern; und

eine Geschwindigkeitswellenform-Kombinationseinheit (314), die konfiguriert ist, um die Geschwindigkeitswellenform von der Geschwindigkeitswellenform-Erzeugungseinheit (312) zu empfangen, vorherige Geschwindigkeitswellenformen zu lesen, die zuvor erzeugt und in der Geschwindigkeitswellenform-Speichereinheit (315)a gespeichert wurden, und die vorherigen Geschwindigkeitswellenformen mit der empfangenen Wellenform zu kombinieren; und

eine Schätzeinheit (500), die konfiguriert ist, um eine Position zu schätzen, an der sich die Trägheitsvorrichtung gegenwärtig befindet, unter Verwendung von Geschwindigkeitsdaten, die die letzte Geschwindigkeit repräsentieren, indem auf Werte der kombinierten Geschwindigkeitswellenform zum gegenwärtigen Zeitpunkt Bezug genommen wird.

2. Trägheitsvorrichtung (1) nach Anspruch 1, wobei die Schätzeinheit (500) die Position schätzt, an der sich die Trägheitsvorrichtung (1) gegenwärtig befindet, unter Verwendung sowohl der Geschwindigkeitsdaten als auch gegebener Fehlerdaten, die einen Fehlergrad bei der Berechnung der Geschwindigkeitsdaten wiedergeben.

3. Trägheitsvorrichtung (1) nach Anspruch 2, ferner mit einer Eingabeeinheit (400), die konfiguriert ist, um absolute Positionsdaten, die von einem Positionsdatensender (A) empfangen werden, und Fehlerdaten der absoluten Positionsdaten in die Schätzeinheit (500) einzugeben; wobei die Schätzeinheit (500) die geschätzte Position unter Verwendung der absoluten Positionsdaten und der Fehlerdaten der absoluten Positionsdaten aktualisiert.

4. Trägheitsvorrichtung (1) nach Anspruch 3, ferner mit:

einer Messeinheit (403), die konfiguriert ist, um ein Intervall zu messen, um die absoluten Positionsdaten zu empfangen; und
einer Korrektureinheit (404), die konfiguriert ist, um die Fehlerdaten der absoluten Positionsdaten gemäß dem gemessenen Intervall zu korrigieren.

5. Trägheitsvorrichtung (1) nach Anspruch 3 oder 4, wobei die Eingabeeinheit (400) andere absolute Positionsdaten, die von anderen Positionsdatensendern unter Verwendung unterschiedlicher Kommunikationsverfahren empfangen werden, und Fehlerdaten der anderen absoluten Positionsdaten in die Schätzeinheit eingibt.

6. Trägheitsvorrichtung (1) nach Anspruch 5, wobei die Eingabeeinheit (400) die anderen absoluten Positionsdaten eingibt, die von einem der anderen Positionsdatensender über Kommunikationen empfangen wurden, die dem IMES-Standard (Indoor Messaging System) entsprechen.

7. Trägheitsvorrichtung (1), nach einem der Ansprüche 1 bis 6, ferner mit einer Kartenabgleichungseinheit (600), die konfiguriert ist, um die geschätzte Position mit einer Karte abzugleichen, die zulässige Bereiche definiert, in die das Ziel eintreten darf, und verbotene Bereiche, in die das Ziel nicht eintreten darf, und um die Position zu korrigieren, wenn sich die geschätzte Position in den verbotenen Bereichen befindet, wobei die Schätzeinheit (500) die geschätzte Position gemäß der korrigierten Position aktualisiert.

8. Verfahren, welches umfasst:

Das Erzeugen einer Ausgabe, die eine Bewegung eines gehenden Benutzers darstellt, der eine Trägheitsvorrichtung hat, die eine Trägheitssensoreinheit verwendet, wobei die Trägheitsvorrichtung einen Beschleunigungssensor (14) umfasst, der konfiguriert ist, um eine dreiachsige Beschleunigung in einem von der Trägheitsvorrichtung verwendeten Vorrichtungskoordinatensystem zu erfassen;
das Umwandeln der vom Beschleunigungssensor (14) im Vorrichtungskoordinatensystem erhaltenen dreiachsigen Beschleunigung in die absolute Beschleunigung im Weltkoordinatensystem;
das Berechnen, mittels einer Richtungsschätzeinheit (200)und aus einer horizontalen Komponente einer umgewandelten Geschwindigkeit (214), einer vertikalen Komponente einer Spitzenbeschleunigung (215), eines Gehzyklus' (216), einer Amplitude der Körperbewegung von Seite zu Seite (217)und einer Fortbewegungsrichtung (213);
das Berechnen, durch eine Geschwindigkeitsschätzeinheit (300), eines Geschwindigkeitsschätzungsvektors, der eine tatsächliche Geschwindigkeit des gehenden Benutzers darstellt, der die Trägheitsvorrichtung trägt, basierend auf der horizontalen Komponente der umgewandelten Geschwindigkeit (214), der vertikalen Komponente der Spitzenbeschleunigung (215); dem Gehzyklus (216), der Amplitude der Körperbewegung von Seite zu Seite (217) und der Fortbewegungsrichtung (213), wobei das Berechnen der Geschwindigkeitsschätzung umfasst:

das Umwandeln, mittels einer Umwandlungseinheit (306), der horizontalen Komponente der umgewandelten Geschwindigkeit (214), der vertikalen Komponente der Spitzenbeschleunigung (215), des Gehzyklus' (216), der Amplitude (217) und der Richtung (213)in einen Geschwindigkeitsparameter Pa (307), einen Intensitätsparameter Pb (308), einen Zyklusparameter Pc (309), einen Amplitudenparameter Pd (310) bzw. einen Richtungsparameter Pe (311), wobei der Geschwindigkeitsparameter Pa (307) der Intensitätsparameter Pb (308), der Zyklusparameter Pc (309), der Amplitudenparameter Pd (310) und der Richtungsparameter Pe (311) Eingabeparameter sind;
das Bezugnehmen, mittels einer Geschwindigkeitswellenform-Erzeugungseinheit (312), auf eine Parameterdatenbank (313) zum Spezifizieren von Geschwindigkeitserzeugungsfaktoren Ca-Cc unter Verwendung der Eingabeparameter (307-311) und gegebener Attribute des gehenden Benutzers, wobei die Parameterdatenbank im Voraus erstellt wird, basierend auf Daten, die durch ein Experiment erfasst wurden, bei dem eine Gruppe von Zielen mit gemeinsamen Attributen eine Bewegung ausführt, die durch die Eingabeparameter (307 - 311) bestimmt wird,

das Erzeugen, durch die Geschwindigkeitswellenform-Erzeugungseinheit (312), einer Geschwindigkeitswellenform unter Verwendung des Geschwindigkeitsparameters Pa (307), des Intensitätsparameters Pb (308), des Zyklusparameters Pc (309), des Amplitudenparameters Pd (310) und des Richtungsparameters Pe (311) und der geschwindigkeitserzeugenden Faktoren Ca-Cc, gemäß den folgenden Gleichungen:

$$Ve_x = (P_a C_a + P_b C_b + P_d C_c) sin(\frac{\pi}{P_c} t) cos\theta$$

$$Ve_y = (P_a C_a + P_b C_b + P_d C_c) sin(\frac{\pi}{P_c} t) sin\theta$$

das Speichern von Wellenformen, die zuvor erzeugt wurden, durch eine Geschwindigkeitswellenformspeichereinheit (315); und

das Empfangen der Geschwindigkeitswellenform von der Geschwindigkeitswellenform-Erzeugungseinheit (312) durch eine Geschwindigkeitswellenform-Kombinationseinheit (314);

das Lesen vorheriger Geschwindigkeitswellenformen, die zuvor erzeugt und in der Geschwindigkeitswellenformspeichereinheit (315)a gespeichert wurden;

das Kombinieren der vorherigen Geschwindigkeitswellenformen mit der empfangenen Wellenform; und

das Schätzen einer Position, an der sich die Trägheitsvorrichtung gegenwärtig befindet, unter Verwendung von Geschwindigkeitsdaten, die die letzte Geschwindigkeit darstellen, indem auf Werte der kombinierten Geschwindigkeitswellenform zum gegenwärtigen Zeitpunkt Bezug genommen wird.

9. Programm, welches bewirkt, dass eine Trägheitsvorrichtung mit einem Beschleunigungssensor (14), der konfiguriert ist, um eine dreiachsige Beschleunigung in einem von der Trägheitsvorrichtung verwendeten Vorrichtungskoordinatensystem zu erfassen, das Verfahren gemäß Anspruch 8 ausführt.

## Revendications

1. Dispositif inertiel (1) porté par un utilisateur qui marche, comprenant :

   une unité à capteur inertiel configurée pour générer une sortie représentant un mouvement d'un utilisateur qui marche, tenant le dispositif inertiel, dans lequel l'unité à capteur inertiel comprend un capteur d'accélération (14) configuré pour détecter une accélération en trois axes dans un système de coordonnées de dispositif utilisé par le dispositif inertiel ;

   une unité de conversion de système de coordonnées (100) configurée pour convertir l'accélération en trois axes, obtenue du capteur d'accélération (14) dans le système de coordonnées de dispositif, en accélération absolue dans le système de coordonnées universel ;

   une unité d'estimation de direction (200) adaptée pour calculer, à partir de l'accélération absolue, une composante horizontale d'une vitesse convertie (214), une composante verticale d'accélération maximale (215), un cycle de marche (216), une amplitude de mouvement corporel d'un côté à l'autre (217), et une direction de déplacement (213) ;

   une unité d'estimation de vitesse (300) adaptée pour calculer un vecteur d'estimation de vitesse qui représente une vitesse réelle de l'utilisateur qui marche, portant le dispositif inertiel, sur la base de la composante horizontale de la vitesse convertie (214), de la composante verticale d'accélération maximale (215), du cycle de marche (216), de l'amplitude de mouvement corporel d'un côté à l'autre (217), et de la direction de déplacement (213), dans lequel l'unité d'estimation de vitesse comprend :

   une unité de conversion (306) configurée pour convertir la composante horizontale de la vitesse convertie (214), la composante verticale d'accélération maximale (215), le cycle de marche (216), l'amplitude (217), et la direction (213) en un paramètre de vitesse Pa (307), un paramètre d'intensité Pb (308), un paramètre de cycle Pc (309), un paramètre d'amplitude Pd (310), et un paramètre de direction Pe (311), respectivement, dans lequel le paramètre de vitesse Pa (307), le paramètre d'intensité Pb (308), le paramètre de cycle Pc (309), le paramètre d'amplitude Pd (310), et le paramètre de direction Pe (311) sont des paramètres d'entrée ;

une base de données de paramètres (313) configurée pour stocker des facteurs de génération de vitesse Ca-Cc associés aux paramètres d'entrée et à des attributs d'un utilisateur qui marche, dans lequel le paramètre (313) est créé d'avance sur la base de données acquises par une expérience dans laquelle un groupe d'utilisateurs qui marchent, ayant des attributs communs, réalise un mouvement déterminé par les paramètres d'entrée (307-311) ;

une unité de génération de forme d'onde de vitesse (312) configurée pour consulter la base de données de paramètres (313) pour spécifier des facteurs de génération de vitesse Ca-Cc en utilisant les paramètres d'entrée (307-311) et des attributs fournis de l'utilisateur qui marche, dans lequel l'unité de génération de forme d'onde de vitesse (312) est en outre configurée pour générer une forme d'onde de vitesse en utilisant le paramètre de vitesse Pa (307), le paramètre d'intensité Pb (308), le paramètre de cycle Pc (309), le paramètre d'amplitude Pd (310), et le paramètre de direction Pe (311) et les facteurs de génération de vitesse Ca-Cc selon les équations suivantes :

$$Ve_x = (P_a C_a + P_b C_b + P_d C_c)sin(\frac{\pi}{P_c}t)cos\theta$$

$$Ve_y = (P_a C_a + P_b C_b + P_d C_c)sin(\frac{\pi}{P_c}t)sin\theta$$

une unité de stockage de formes d'onde de vitesse (315) configurée pour stocker des formes d'onde qui ont été générées auparavant ; et

une unité de combinaison de formes d'onde de vitesse (314) configurée pour recevoir la forme d'onde de vitesse à partir de l'unité de génération de forme d'onde de vitesse (312), lire des formes d'onde de vitesse passées qui ont été générées auparavant et stockées dans l'unité de stockage de formes d'onde de vitesse (315)a, et combiner les formes d'onde de vitesse passées à la forme d'onde reçue ; et

une unité d'estimation (500) configurée pour estimer une position dans laquelle le dispositif inertiel est actuellement situé en utilisant des données de vitesse représentant la toute dernière vitesse en consultant des valeurs de la forme d'onde de vitesse combinée, à l'instant actuel.

2. Dispositif inertiel (1) selon la revendication 1, dans lequel l'unité d'estimation (500) estime la position où le dispositif inertiel (1) est actuellement situé en utilisant les données de vitesse et des données d'erreur fournies représentant un degré d'erreur dans le calcul des données de vitesse.

3. Dispositif inertiel (1) selon la revendication 2, comprenant en outre une unité d'entrée (400) configurée pour entrer des données positionnelles absolues, qui sont reçues à partir d'un transmetteur de données positionnelles (A), et des données d'erreur des données positionnelles absolues dans l'unité d'estimation (500) ; dans lequel l'unité d'estimation (500) met à jour la position estimée en utilisant les données positionnelles absolues et les données d'erreur des données positionnelles absolues.

4. Dispositif inertiel (1) selon la revendication 3, comprenant en outre :

une unité de mesure (403) configurée pour mesurer un intervalle pour recevoir les données positionnelles absolues ; et
une unité de correction (404) configurée pour corriger les données d'erreur des données positionnelles absolues selon l'intervalle mesuré.

5. Dispositif inertiel (1) selon la revendication 3 ou 4, dans lequel l'unité d'entrée (400) entre d'autres données positionnelles absolues, qui sont reçues à partir d'autres transmetteurs de données positionnelles employant des procédés de communication différents les uns des autres, et des données d'erreur des autres données positionnelles absolues dans l'unité d'estimation.

6. Dispositif inertiel (1) selon la revendication 5, dans lequel l'unité d'entrée (400) entre les autres données positionnelles absolues reçues à partir d'un des autres transmetteurs de données positionnelles par l'intermédiaire de communications se conformant à la norme IMES (Indoor Messaging System).

7. Dispositif inertiel (1) selon l'une quelconque des revendications 1 à 6, comprenant en outre une unité d'assortiment de carte (600) configurée pour assortir la position estimée à une carte définissant des zones permises dans lesquelles la cible est permise d'entrer et des zones interdites dans lesquelles la cible n'est pas permise d'entrer et pour corriger la position lorsque la position estimée est dans les zones interdites, dans lequel l'unité d'estimation (500) met à jour la position estimée selon la position corrigée.

8. Procédé, comprenant :

la génération d'une sortie représentant un mouvement d'un utilisateur qui marche, tenant un dispositif inertiel, en utilisant une unité à capteur inertiel, dans lequel l'unité à capteur inertiel comprend un capteur d'accélération (14) configuré pour détecter une accélération en trois axes dans un système de coordonnées de dispositif utilisé par le dispositif inertiel ;
la conversion de l'accélération en trois axes, obtenue à partir du capteur d'accélération (14) dans le système de coordonnées de dispositif, en accélération absolue dans le système de coordonnées universel ;
le calcul, par une unité d'estimation de direction (200) et à partir de l'accélération absolue, d'une composante horizontale d'une vitesse convertie (214), d'une composante verticale d'accélération maximale (215), d'un cycle de marche (216), d'une amplitude de mouvement corporel d'un côté à l'autre (217), et d'une direction de déplacement (213) ;
le calcul, par une unité d'estimation de vitesse (300), d'un vecteur d'estimation de vitesse qui représente une vitesse réelle de l'utilisateur qui marche, portant le dispositif inertiel, sur la base de la composante horizontale de la vitesse convertie (214), de la composante verticale d'accélération maximale (215), du cycle de marche (216), de l'amplitude de mouvement corporel d'un côté à l'autre (217), et de la direction de déplacement (213), dans lequel le calcul de l'estimation de vitesse comprend :

la conversion, par une unité de conversion (306), de la composante horizontale de la vitesse convertie (214), de la composante verticale d'accélération maximale (215), du cycle de marche (216), de l'amplitude (217), et de la direction (213) en un paramètre de vitesse Pa (307), un paramètre d'intensité Pb (308), un paramètre de cycle Pc (309), un paramètre d'amplitude Pd (310), et un paramètre de direction Pe (311), respectivement, dans lequel le paramètre de vitesse Pa (307), le paramètre d'intensité Pb (308), le paramètre de cycle Pc (309), le paramètre d'amplitude Pd (310), et le paramètre de direction Pe (311) sont des paramètres d'entrée ;
la consultation, par une unité de génération de forme d'onde de vitesse (312), d'une base de données de paramètres (313) pour spécifier des facteurs de génération de vitesse Ca-Cc en utilisant les paramètres d'entrée (307-311) et des attributs fournis de l'utilisateur qui marche, dans lequel la base de données de paramètres est créée d'avance sur la base de données acquises par une expérience dans laquelle un groupe de cibles, ayant des attributs communs, réalise un mouvement déterminé par les paramètres d'entrée (307-311),
la génération, par l'unité de génération de forme d'onde de vitesse (312), d'une forme d'onde de vitesse en utilisant le paramètre de vitesse Pa (307), le paramètre d'intensité Pb (308), le paramètre de cycle Pc (309), le paramètre d'amplitude Pd (310), et le paramètre de direction Pe (311) et les facteurs de génération de vitesse Ca-Cc selon les équations suivantes :

$$Ve_x = (P_a C_a + P_b C_b + P_d C_e) sin(\frac{\pi}{P_C} t) cos\theta$$

$$Ve_y = (P_a C_a + P_b C_b + P_d C_e) sin(\frac{\pi}{P_C} t) sin\theta$$

le stockage, par une unité de stockage de formes d'onde de vitesse (315), de formes d'onde qui ont été générées auparavant ; et
la réception, par une unité de combinaison de formes d'onde de vitesse (314), de la forme d'onde de vitesse à partir de l'unité de génération de forme d'onde de vitesse (312),

la lecture de formes d'onde de vitesse passées qui ont été générées auparavant et stockées dans l'unité de stockage de formes d'onde de vitesse (315)a, et
la combinaison des formes d'onde de vitesse passées à la forme d'onde reçue ; et

l'estimation d'une position dans laquelle le dispositif inertiel est actuellement situé en utilisant des données de vitesse représentant la toute dernière vitesse en faisant référence à des valeurs de la forme d'onde de vitesse combinée, à l'instant actuel.

9. Programme pour faire en sorte qu'un dispositif inertiel (1), comprenant un capteur d'accélération (14) configuré pour détecter une accélération en trois axes dans un système de coordonnées de dispositif utilisé par le dispositif inertiel, réalise le procédé selon la revendication 8.

FIG.1

DEVICE COORDINATE SYSTEM

ABSOLUTE COORDINATE SYSTEM

# FIG.2

INERTIAL DEVICE

| MICROPHONE 17 | SPEAKER 18 | COMMUNICATION MODULE 19 | BLUETOOTH (TM) COMMUNICATION MODULE 20 | GPS RECEIVER MODULE 21 | DISPLAY 22 | TOUCH PANEL 23 |

26

| CPU 11 | RAM 12 | ROM 13 | ACCELERATION SENSOR 14 | ANGULAR VELOCITY SENSOR 15 | MAGNETIC FIELD SENSOR 16 | ATMOSPHERIC PRESSURE SENSOR 25 | BATTERY 24 |

EP 2 951 529 B1

FIG.3

# FIG.4

EP 2 951 529 B1

TIME UPDATE

MEASUREMENT
UPDATE 1

MEASUREMENT
UPDATE 2

| POSTURE DATA UPDATE USING OUTPUT FROM ANGULAR VELOCITY SENSOR (ROLL, PITCH, AND YAW ANGLES) | POSTURE DATA UPDATE USING OUTPUT FROM ACCELERATION SENSOR (ROLL AND PITCH ANGLES ONLY) | POSTURE DATA UPDATE USING OUTPUT FROM MAGNETIC FIELD SENSOR (YAW ANGLE ONLY) |
|---|---|---|
| | | UPDATE BASED ON RESULT OF "TRIAD ALGORISM" |

EP 2 951 529 B1

(1) VARIABLES OF SYSTEM STATE ESTIMATE MODEL (TIME UPDATE MODEL)

$\hat{x}_{k|k-1}$ : STATE ESTIMATE VALUES (VECTOR) AT PRESENT ——(1)-1

$f(\hat{x}_{k-1|k-1}, u_k, 0)$ : STATE ESTIMATE MODEL EQUATION ——(1)-2

$\hat{x}_{k-1|k-1}$ : STATE ESTIMATE VALUES (VECTOR) AT THE PREVIOUS STEP ——(1)-3

$u_k$ : INPUT VALUES (VECTOR) AT PRESENT ——(1)-4

(1) SYSTEM STATE ESTIMATE MODEL (TIME UPDATE MODEL)

$$\hat{x}_{k|k-1} = f(\hat{x}_{k-1|k-1}, u_k, 0)$$

——(1)-5

DEFINITION OF STATE ESTIMATE VALUES

$$x_{k|k-1} = \begin{bmatrix} w_k & x_k & y_k & z_k & bx_k & by_k & bz_k \end{bmatrix}^T \cdots (1)\text{-}1$$

DEFINITION OF INPUT VALUES

$$u_k = \begin{bmatrix} \omega_{xk} \\ \omega_{yk} \\ \omega_{zk} \end{bmatrix} = \begin{bmatrix} \omega_{0xk} - bx_k \\ \omega_{0yk} - by_k \\ \omega_{0zk} - bz_k \end{bmatrix} \cdots (1)\text{-}4$$

SYSTEM STATE ESTIMATE MODEL (TIME UPDATE MODEL)

$$x_{k|k-1} = Ax_{k-1|k-1}$$

$$\begin{bmatrix} w_k \\ x_k \\ y_k \\ z_k \\ bx_k \\ by_k \\ bz_k \end{bmatrix} = \frac{1}{2} \begin{bmatrix} 2 & -\omega_x t & -\omega_y t & -\omega_z t & 0 & 0 & 0 \\ \omega_x t & 2 & -\omega_z t & \omega_y t & 0 & 0 & 0 \\ \omega_y t & \omega_z t & 2 & -\omega_x t & 0 & 0 & 0 \\ \omega_z t & \omega_y t & \omega_x t & 2 & 0 & 0 & 0 \\ 0 & 0 & 0 & 0 & C_1 & 0 & 0 \\ 0 & 0 & 0 & 0 & 0 & C_2 & 0 \\ 0 & 0 & 0 & 0 & 0 & 0 & C_3 \end{bmatrix} \begin{bmatrix} w_{k-1} \\ x_{k-1} \\ y_{k-1} \\ z_{k-1} \\ bx_{k-1} \\ by_{k-1} \\ bz_{k-1} \end{bmatrix} \cdots (1)\text{-}5$$

$(C_1, C_2, C_3 : \text{GIVEN VALUES})$

FIG.5

## (2) PARTIAL DIFFERENTIAL MATRIX (JACOBIAN) AT TIME UPDATE

$F_k$ :PARTIAL DIFFERENTIAL MATRIX (JACOBIAN) AT TIME UPDATE $\quad\cdots$(2)-1

$\dfrac{\partial f}{\partial x}\bigg|_{\hat{x}_{k-1|k-1},u_k}$ :CALCULATE JACOBIAN BY PARTIALLY DIFFERENTIATING THE STATE ESTIMATE MODEL EQUATION AT PRESENT $\quad\cdots$(2)-2

(2) PARTIAL DIFFERENTIAL MATRIX (JACOBIAN) AT TIME UPDATE

$$F_k = \dfrac{\partial f}{\partial x}\bigg|_{\hat{x}_{k-1|k-1},u_k}$$

$\cdots$(2)-3

SYSTEM STATE ESTIMATE MODEL (TIME UPDATE MODEL)

$$x_{k|k-1} = Ax_{k-1|k-1} \quad\cdots(1)-16$$

$$= f$$

$$
\begin{bmatrix} w_k \\ x_k \\ y_k \\ z_k \\ bx_k \\ by_k \\ bz_k \end{bmatrix}
= \frac{1}{2}
\begin{bmatrix}
2 & -\omega_x t & -\omega_y t & -\omega_z t & 0 & 0 & 0 \\
\omega_x t & 2 & -\omega_z t & \omega_y t & 0 & 0 & 0 \\
\omega_y t & \omega_z t & 2 & -\omega_x t & 0 & 0 & 0 \\
\omega_z t & \omega_y t & \omega_x t & 2 & 0 & 0 & 0 \\
0 & 0 & 0 & 0 & C_1 & 0 & 0 \\
0 & 0 & 0 & 0 & 0 & C_2 & 0 \\
0 & 0 & 0 & 0 & 0 & 0 & C_3
\end{bmatrix}
\begin{bmatrix} w_{k-1} \\ x_{k-1} \\ y_{k-1} \\ z_{k-1} \\ bx_{k-1} \\ by_{k-1} \\ bz_{k-1} \end{bmatrix}
\quad\cdots(1)-17
$$

$$= f$$

$(C_1, C_2, C_3$ :GIVEN VALUES$)$

FIG.6

EP 2 951 529 B1

(3) ERROR COVARIANCE ESTIMATE MODEL (ACCURACY OF ESTIMATE VALUES)

$P_{k|k-1}$ : ERROR COVARIANCE AT PRESENT $\qquad \cdots(3)\text{-}1$

$P_{k-1|k-1}$ : ERROR COVARIANCE AT THE PREVIOUS STEP $\qquad \cdots(3)\text{-}2$

$F_k^T$ : TRANSPOSED MATRIX OF PARTIAL DIFFERENTIAL MATRIX (JACOBIAN) AT TIME UPDATE $\qquad \cdots(3)\text{-}3$

$Q_k$ : PROCESS NOISE (MATRIX) $\qquad \cdots(3)\text{-}4$

(3) ERROR COVARIANCE ESTIMATE MODEL (ACCURACY OF ESTIMATE VALUES)

$$P_{k|k-1} = F_k P_{k-1|k-1} F_k^T + Q_k$$

$\qquad \cdots(3)\text{-}5$

$$Q_k = \begin{bmatrix} q_{wk} & 0 & 0 & 0 & 0 & 0 & 0 \\ 0 & q_{xk} & 0 & 0 & 0 & 0 & 0 \\ 0 & 0 & q_{yk} & 0 & 0 & 0 & 0 \\ 0 & 0 & 0 & q_{zk} & 0 & 0 & 0 \\ 0 & 0 & 0 & 0 & q_{bxk} & 0 & 0 \\ 0 & 0 & 0 & 0 & 0 & q_{byk} & 0 \\ 0 & 0 & 0 & 0 & 0 & 0 & q_{bzk} \end{bmatrix} \qquad \cdots(3)\text{-}4$$

FIG.7

EP 2 951 529 B1

EP 2 951 529 B1

**(1) OBSERVATION RESIDUALS**

$\tilde{y}_k$ :OBSERVATION RESIDUALS (VECTOR) ~~···(1)-1~~

$z_k$ :OBSERVATION VALUES (VECTOR) ~~···(1)-2~~

$h(\hat{x}_{k|k-1},0)$ :OBSERVATION VALUES (VECTOR) AT THE PREVIOUS STEP

~~···(1)-3~~

(1) OBSERVATION RESIDUALS

$$\tilde{y}_k = z_k - h(\hat{x}_{k|k-1},0) \quad \text{~~···(1)-4~~}$$

OBSERVATION VALUES (VECTOR)
AT THE PREVIOUS STEP

$$h = \begin{bmatrix} 2x_k z_k - 2w_k y_k \\ 2y_k z_k + 2w_k x_k \\ 1 - 2(x_k x_k + y_k y_k) \end{bmatrix} \quad \cdots (1)\text{-}3$$

OBSERVATION VALUES (VECTOR)

$$z_k = \frac{1}{\sqrt{a_x a_x + a_y a_y + a_z a_z}} \begin{bmatrix} a_x \\ a_y \\ a_z \end{bmatrix} \quad \cdots (1)\text{-}2$$

FIG.8

EP 2 951 529 B1

**(1) OBSERVATION RESIDUALS**

$\widetilde{y}_k$ : OBSERVATION RESIDUALS (VECTOR) ――― (1)-1

$z_k$ : OBSERVATION VALUES (VECTOR) ――― (1)-2

$h(\hat{x}_{k|k-1},0)$ : OBSERVATION VALUES (VECTOR) AT THE PREVIOUS STEP

――― (1)-3

(1) OBSERVATION RESIDUALS

$$\widetilde{y}_k = z_k - h(\hat{x}_{k|k-1},0) \quad \text{(1)-4}$$

OBSERVATION VALUES (VECTOR) AT THE PREVIOUS STEP

$$h = \begin{bmatrix} 1 - 2(y_k y_k + z_k z_k) \\ 2x_k y_k - 2w_k z_k \\ 2x_k z_k + 2w_k y_k \end{bmatrix} \quad \cdots (1)\text{-}8$$

OBSERVATION VALUES (VECTOR)

$$z_k = \begin{bmatrix} TRIAD_x \\ TRIAD_y \\ TRIAD_z \end{bmatrix} \quad \cdots (1)\text{-}9$$

FIG.9

FIG.10

# FIG.11

EP 2 951 529 B1

# FIG.12

HORIZONTAL COMPONENT OF
CONVERTED VELOCITY VECTOR

$$V = \begin{bmatrix} x \\ y \end{bmatrix}$$

ACTUAL DIRECTION

EP 2 951 529 B1

FIG.13

START

S100
IS VERTICAL COMPONENT OF PEAK OF CONVERTED ACCELERATION WITHIN A PREDETERMINED RANGE?
— NO →

YES

S200
IS AMPLITUDE OF HORIZONTAL COMPONENT OF CONVERTED VELOCITY WITHIN A PREDETERMINED RANGE?
— NO →

YES

S300
IS WALKING CYCLE WITHIN A PREDETERMINED RANGE?
— NO →

YES

S400
IS AMPLITUDE OF MOVEMENT IN HORIZONTAL DIRECTION WITHIN A PREDETERMINED RANGE?
— NO →

YES

S500
CAUSED BY WALKING MOTION

S600
CAUSED BY NON-WALKING MOTION

END

FIG.14

(a)

$$V = \begin{bmatrix} x \\ y \end{bmatrix}$$

(b)

# FIG.15

EP 2 951 529 B1

# FIG.16

EP 2 951 529 B1

# FIG.17

# FIG.18

EP 2 951 529 B1

# FIG.19

EP 2 951 529 B1

| index | SEX | AGE | HEIGHT | VELOCITY PARAMETER Pa | INTENSITY PARAMETER Pb | CYCLE PARAMETER Pc | AMPLITUDE PARAMETER Pd | VELOCITY GENERATING FACTOR Ca | VELOCITY GENERATING FACTOR Cb | VELOCITY GENERATING FACTOR Cc |
|---|---|---|---|---|---|---|---|---|---|---|
| | | | | 307 | 308 | 309 | 310 | | | 313 |
| 1 | MALE | 20 | 170 | 0.6 | 0.2 | 1 | 3 | 0.2 | 0.2 | 0.6 |
| 5 | MALE | 20 | 170 | 0.6 | 0.2 | 2 | 1 | 0.5 | 0.3 | 0.2 |
| 10 | MALE | 20 | 170 | 0.2 | 0.1 | 2 | 1 | 0.5 | 0.3 | 0.2 |
| ... | ... | ... | ... | ... | ... | ... | ... | ... | ... | ... |

# FIG.20

# FIG.21

VELOCITY AFTER COMBINATION OF WAVEFORMS

FIG.22

# FIG.23

EP 2 951 529 B1

## (1) VARIABLES OF SYSTEM STATE ESTIMATE MODEL (TIME UPDATE MODEL)

$\hat{x}_{k|k-1}$   :STATE ESTIMATE VALUES (VECTOR) AT PRESENT ——(1)-1

$f(\hat{x}_{k-1|k-1}, u_k, 0)$   :STATE ESTIMATE MODEL EQUATION ——(1)-2

$\hat{x}_{k-1|k-1}$   :STATE ESTIMATE VALUES (VECTOR) AT THE PREVIOUS STEP ···(1)-3

$u_k$   :INPUT VALUES (VECTOR) AT PRESENT ——(1)-4

(1) SYSTEM STATE ESTIMATE MODEL (TIME UPDATE MODEL)

$$\hat{x}_{k|k-1} = f(\hat{x}_{k-1|k-1}, u_k, 0)$$

——(1)-5

DEFINITION OF STATE ESTIMATE VALUES

$$x_{k|k-1} = \begin{bmatrix} X & Y & Z \end{bmatrix}^T \qquad \cdots(1)\text{-}10$$

DEFINITION OF INPUT VALUES

VELOCITY VECTOR (m/s)

$$u_k = \begin{bmatrix} V_x & V_y & V_z \end{bmatrix}^T \qquad \cdots(1)\text{-}11$$

SYSTEM STATE ESTIMATE MODEL (TIME UPDATE MODEL)

$$x_{k|k-1} = x_{k-1|k-1} + u_k t \qquad \cdots(1)\text{-}12$$

FIG.24

## (2) PARTIAL DIFFERENTIAL MATRIX (JACOBIAN) AT TIME UPDATE

$F_k$ :PARTIAL DIFFERENTIAL MATRIX (JACOBIAN) AT TIME UPDATE ——— (2)-1

$$\frac{\partial f}{\partial x}\bigg|_{\hat{x}_{k-1|k-1},u_k}$$ :CALCULATE JACOBIAN BY PARTIALLY DIFFERENTIATING THE STATE ESTIMATE MODEL EQUATION AT PRESENT ——— (2)-2

┌─ (2) PARTIAL DIFFERENTIAL MATRIX (JACOBIAN) AT TIME UPDATE ─┐

$$F_k = \frac{\partial f}{\partial x}\bigg|_{\hat{x}_{k-1|k-1},u_k}$$

——— (2)-3

$$x_{k|k-1} = \boxed{x_{k-1|k-1} + u_k t} \quad \cdots(1)\text{-}\cancel{6}\ \text{/3}$$
$$= f$$

FIG.25

EP 2 951 529 B1

## (3) ERROR COVARIANCE ESTIMATE MODEL (ACCURACY OF ESTIMATE VALUES)

$P_{k|k-1}$ :ERROR COVARIANCE AT PRESENT $\cdots$(3)-1

$P_{k-1|k-1}$ :ERROR COVARIANCE AT THE PREVIOUS STEP $\cdots$(3)-2

$F_k^T$ :TRANSPOSED MATRIX OF PARTIAL DIFFERENTIAL MATRIX (JACOBIAN) AT TIME UPDATE $\cdots$(3)-3

(3) ERROR COVARIANCE ESTIMATE MODEL (ACCURACY OF ESTIMATE VALUES)

$$P_{k|k-1} = F_k P_{k-1|k-1} F_k^T + Q_k$$

$\cdots$(3)-5

$Q_k$ :PROCESS NOISE (MATRIX) $\cdots$(3)-4

EP 2 951 529 B1

$$Q_k = \sigma_v = \begin{bmatrix} q_{vx} & 0 & 0 \\ 0 & q_{vy} & 0 \\ 0 & 0 & q_{vz} \end{bmatrix}$$

$\cdots$(3)-4

FIG.26

EP 2 951 529 B1

**(1) OBSERVATION RESIDUALS**

$\widetilde{y}_k$ :OBSERVATION RESIDUALS (VECTOR) ~~···(1)-1~~

$z_k$ :OBSERVATION VALUES (VECTOR) ~~···(1)-2~~

$h(\hat{x}_{k|k-1},0)$ :OBSERVATION VALUES (VECTOR) AT THE PREVIOUS STEP

~~···(1)-3~~

(1) OBSERVATION RESIDUALS

$$\widetilde{y}_k = z_k - h(\hat{x}_{k|k-1},0) \quad \text{~~···(1)-4~~}$$

OBSERVATION VALUES (VECTOR)
AT THE PREVIOUS STEP

$$h = \begin{bmatrix} X & Y & Z \end{bmatrix}^T \quad \cdots(1)\text{-}1\,14$$

OBSERVATION VALUES (VECTOR)

$$z_k = \begin{bmatrix} X_1 & Y_1 & Z_1 \end{bmatrix}^T \quad \cdots(1)\text{-}1\,15$$

FIG.27

## TIME UPDATE

(1) SYSTEM STATE ESTIMATE MODEL
(TIME UPDATE MODEL)

$$\hat{x}_{k|k-1} = f(\hat{x}_{k-1|k-1}, u_k, 0)$$

(2) PARTIAL DIFFERENTIAL MATRIX
(JACOBIAN) AT TIME UPDATE

$$F_k = \left.\frac{\partial f}{\partial x}\right|_{\hat{x}_{k-1|k-1}, u_k}$$

(3) ERROR COVARIANCE ESTIMATE MODEL
(ACCURACY OF ESTIMATE VALUES)

$$P_{k|k-1} = F_k P_{k-1|k-1} F_k^T + Q_k$$

## MEASUREMENT UPDATE

(1) OBSERVATION RESIDUALS

$$\tilde{y}_k = z_k - h(\hat{x}_{k|k-1}, 0) \qquad z_k = h(x_k, v_k)$$

(2) PARTIAL DIFFERENTIAL MATRIX
(JACOBIAN) AT MEASUREMENT UPDATE

$$H_k = \left.\frac{\partial h}{\partial x}\right|_{\hat{x}_{k|k-1}}$$

(3) RESIDUAL COVARIANCE

$$S_k = H_k P_{k|k-1} H_k^T + R_k$$

(4) KALMAN GAIN

$$K_k = P_{k|k-1} H_k^T S_k^{-1}$$

(5) UPDATED STATE ESTIMATE VALUES

$$\hat{x}_{k|k} = \hat{x}_{k|k-1} + K_k \tilde{y}_k$$

(6) UPDATED ERROR COVARIANCE MATRIX

$$P_{k|k} = (I - K_k H_k) P_{k|k-1}$$

(PRIOR ART)

FIG.28

EP 2 951 529 B1

## (1) VARIABLES OF SYSTEM STATE ESTIMATE MODEL (TIME UPDATE MODEL)

$\hat{x}_{k|k-1}$ :STATE ESTIMATE VALUES (VECTOR) AT PRESENT

$f(\hat{x}_{k-1|k-1}, u_k, 0)$ :STATE ESTIMATE MODEL EQUATION

$\hat{x}_{k-1|k-1}$ :STATE ESTIMATE VALUES (VECTOR) AT THE PREVIOUS STEP

$u_k$ :INPUT VALUES (VECTOR) AT PRESENT

## (2) PARTIAL DIFFERENTIAL MATRIX (JACOBIAN) AT TIME UPDATE

$F_k$ :PARTIAL DIFFERENTIAL MATRIX (JACOBIAN) AT TIME UPDATE

$\left.\dfrac{\partial f}{\partial x}\right|_{\hat{x}_{k-1|k-1}, u_k}$ :CALCULATE JACOBIAN BY PARTIALLY DIFFERENTIATING THE STATE

## (3) ERROR COVARIANCE ESTIMATE MODEL (ACCURACY OF ESTIMATE VALUES)

$P_{k|k-1}$ :ERROR COVARIANCE AT PRESENT

$P_{k-1|k-1}$ :ERROR COVARIANCE AT THE PREVIOUS STEP

$F_k^T$ :TRANSPOSED MATRIX OF PARTIAL DIFFERENTIAL MATRIX (JACOBIAN) AT TIME UPDATE

$Q_k$ :PROCESS NOISE (MATRIX): DIAGONAL MATRIX FOR STANDARD VARIATION OF ESTIMATE VALUES AT EACH COMPONENT

# FIG.29

(PRIOR ART)

## (1) OBSERVATION RESIDUALS

$\tilde{y}_k$      :OBSERVATION RESIDUALS (VECTOR)

$z_k$      :OBSERVATION VALUES (VECTOR)

$h(\hat{x}_{k|k-1},0)$  :OBSERVATION VALUES (VECTOR) AT THE PREVIOUS STEP

## (2) PARTIAL DIFFERENTIAL MATRIX (JACOBIAN) AT MEASUREMENT UPDATE

$H_k$      :PARTIAL DIFFERENTIAL MATRIX (JACOBIAN) AT MEASUREMENT UPDATE

$\left.\dfrac{\partial h}{\partial x}\right|_{\hat{x}_{k|k-1}}$  :CALCULATE JACOBIAN BY PARTIALLY DIFFERENTIATING THE STATE ESTIMATE MODEL EQUATION AT PRESENT

## (3) RESIDUAL COVARIANCE

$S_k$      :RESIDUAL COVARIANCE

$P_{k|k-1}$  :RESIDUAL COVARIANCE MATRIX AT PRESENT

$H_k^T$      :PARTIAL DIFFERENTIAL MATRIX (JACOBIAN) AT MEASURE UPDATE

$R_k$      :OBSERVATION NOISE (MATRIX)

## (4) KALMAN GAIN

$K_k$      :KALMAN GAIN (MATRIX)

## (5) UPDATED STATE ESTIMATE VALUES

$\hat{x}_{k|k}$      :UPDATED STATE ESTIMATE VALUES

$\hat{x}_{k|k-1}$  :STATE ESTIMATE VALUES (VECTOR) AT THE PREVIOUS STEP

## (6) UPDATED ERROR COVARIANCE MATRIX

$P_{k|k}$      :UPDATED ERROR COVARIANCE MATRIX

$I$      :IDENTITY MATRIX

(PRIOR ART)

FIG.30

EP 2 951 529 B1

# FIG.31

# FIG.32

CONVERTED ACCELERATION VECTOR IN VERTICAL DIRECTION

ABSOLUTE COORDINATE SYSTEM

SWING PHASE

STANCE PHASE

STANCE PHASE

SWING PHASE

MID STANCE  MID STANCE

MID STANCE  MID STANCE

TRAVELING DIRECTION

CYCLE OF RIGHT FOOT ⇒ FULL FOREFOOT LOAD  MID STANCE  HEEL LIFT  TOE OFF  MID SWING  HEEL-STRIKE  FULL FOREFOOT LOAD

CYCLE OF LEFT FOOT ⇒ HEEL LIFT  TOE OFF  MID SWING  HEEL-STRIKE  FULL FOREFOOT LOAD  MID STANCE  HEEL LIFT

EP 2 951 529 B1

EP 2 951 529 B1

ELAPSED TIME (x 100msec)

FIG.33

# FIG.34

DISTANCE (m)

BASE POINT

DISTANCE (m)

O : ESTIMATED POSITION
··· : ACTUAL WALKING PATH

(a) 2D VIEW

(b) BIRDS-EYE VIEW

NORTH

TRAVELING
DIRECTION

POSITIONAL DATA
TRANSMITTER B

STARTING POINT
/ ENDING POINT
FOR WALKING

POSITIONAL DATA
TRANSMITTER A

METER

O : ESTIMATED POSITION
EVERY 100 MILLISECONDS
··· : ACTUAL WALKING PATH

IMES+DR

FIG.35

EP 2 951 529 B1

FIG.36

NORTH

TRAVELING DIRECTION

POSITION AFTER MEASUREMENT UPDATE CALCULATION

POSITION BEFORE MEASUREMENT UPDATE CALCULATION

POSITIONAL DATA TRANSMITTER A

MEASUREMENT ERROR ACCUMULATED IN TIME UPDATE CALCULATION FOR VELOCITY VECTOR

POSITIONS WHERE MEASUREMENT UPDATE CALCULATION IS EXECUTED VIA POSITIONAL DATA INPUT UNIT

O : ESTIMATED POSITION EVERY 100 MILLISECONDS
··· : ACTUAL WALKING PATH

EP 2 951 529 B1

CALCULATE NORM FROM VECTOR
HAVING THE DIAGONAL ELEMENT
OF ERROR COVARIANCE

FIG.37

EP 2 951 529 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004186695 A
- JP 2012088253 A
- JP 4714853 B
- JP 2003302419 A
- JP 2011237452 A
- JP 2000097722 A
- JP 2002139340 A

**Non-patent literature cited in the description**

- **GREG WELCH ; GARY BISHOP.** An Introduction to the Kalman Filter. Department of Computer Science, University of North Carolina, 24 July 2006
- **TOHRU KATAYAMA.** Applied Kalman Filtering, New Edition. Asakura Bookshop, 20 January 2000
- Kalman filtering for real-time orientation tracking of handheld microsurgical instrument. **WEI TECH ANG et al.** Intelligent Robots and Systems, 2004 (IROS 2004). Proceedings. 2004 IEEE/RSJ International Conference. 28 September 2004, vol. 3, 2574-2580
- **MALCOLM D. SHUSTER.** Deterministic Three-Axis Attitude Determination. *The Journal of the Astronautical Sciences,* July 2004, vol. 52 (3), 405-419
- *TRIAD Algorithm,* 25 May 2011, http://en.wikipedia.org/wiki/User:Snietfeld/TRIA D_Algorithm
- A particle filter tutorial for mobile robot localization. **I. M. REKLEITIS.** Technical Report TR-CIM-04-02. Centre for Intelligent Machines, McGill University, 2004